# EUROPEAN PATENT SPECIFICATION

(11) **EP 0 658 053 B1**
(45) Date of publication and mention of the grant of the patent: **18.08.1999**
(21) Application number: 94918590.4
(22) Date of filing: 28.06.1994
(51) Int. Cl.: H04N 7/32

(54) **APPARATUS FOR DECODING TIME-VARYING IMAGE**
EINRICHTUNG ZUM DEKODIEREN EINES SICH ZEITLICH ÄNDERNDEN BILDES
APPAREIL DE DECODAGE D'UNE IMAGE VARIANT DANS LE TEMPS

(30) Priority: 28.06.1993 JP 15751193
(43) Date of publication of application: 14.06.1995
(60) Divisional application: 98203045.4
(73) Proprietor: SONY CORPORATION, Tokyo 141 (JP)
(72) Inventor: SUMIHIRO, Hiroshi, Sony Corporation, Shinagawa-ku Tokyo 141 (JP); EMOTO, Seiichi, Sony Corporation, Shinagawa-ku Tokyo 141 (JP); WADA, Tohru, Sony Corporation, Shinagawa-ku Tokyo 141 (JP)
(74) Representative: Cotter, Ivan John
(86) International application number: JP9401045
(87) International publication number: WO9501054

(56) References cited:
- EP-A- 0 542 195
- JP-A- 2 200 084
- JP-A- 62 137 983
- US-A- 5 212 742
- HIROSHI YASUDA (auther), "International Standard of Multi-Media Coding", June 30, 1991 (30.06.91), Maruzen, pages 126 to 142.

## Description

This invention relates to a moving picture decoding apparatus, and more particularly to a moving picture decoding apparatus for decoding coded data obtained by predictive coding to reproduce original picture data.

Hitherto, for example, in a system for transmitting video signals of moving picture to remote places like television conference system, or television telephone system, etc., or a system for recording video signals of moving picture onto a picture recording medium such as optical disc, magnetic disc or magnetic tape, etc. and reproducing recorded video signals of moving picture, in order to efficiently utilize transmission path or recording medium, a video signal is caused to undergo so called efficient coding by making use of line correlation or frame correlation that the video signal has to reduce redundancies in the space axis direction and in the time axis direction to transmit only significant information, thus to improve transmission efficiency.

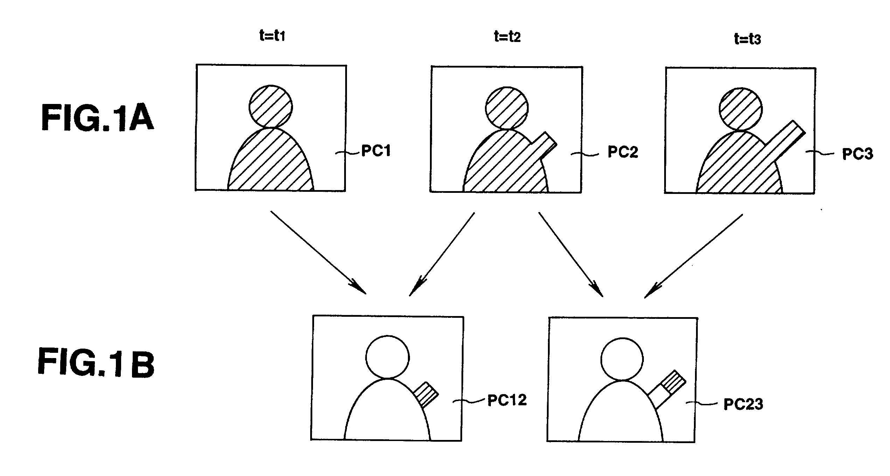

For example, in encoding in the space axis direction (hereinafter referred to as intra-frame coding), as shown in FIG. 1A, e.g., line correlation of video signal is utilized. In the case of transmitting respective pictures (frames) PC1, PC2, PC3 ··· constituting a moving picture at times t1, t2, t3 ···, picture data to be subjected to transmission processing is one-dimensionally encoded, e.g., within the same scanning line, or e.g., picture is divided into a plurality of blocks to two-dimensionally encode picture data of respective blocks to thereby carry out data compression, thus to improve transmission efficiency.

Moreover, in encoding in the time axis direction (hereinafter referred to as inter-frame encoding), correlation between frames (pictures) of video signal is utilized to carry out, e.g., so called predictive coding. Namely, as shown in FIG. 1B, picture data PC12, PC23 ··· comprised of differences (so called predictive errors) of picture data every corresponding pixels between pictures PC1 and PC2, PC2 and PC3 ··· adjacent in succession are determined to transmit these picture data PC12, PC23 ··· to thereby carry out data compression, thus to improve transmission efficiency.

Thus, as compared to the case where all picture data of pictures PC1, PC2, PC3 ··· are transmitted, it is possible to transmit video signals by remarkably lesser data quantity.

Further, in the predictive coding in the above-described inter-frame coding, in order to provide higher efficiency, motion compensated predictive coding is used. Namely, an approach is employed to detect motion of an object moving in a frame, e.g., a person moving at the center of frame, etc. to correct position of picture data used in prediction in the former frame by distance corresponding to that motion to carry out predictive coding, thereby making it possible to improve coding efficiency. However, even if such an approach is employed, great quantity of data must be transmitted with respect to the portion where object moves and appears behind. In view of this, an approach is employed to carry out, in addition to the above-described motion-compensated prediction in the forward direction, motion-compensated prediction in backward direction, or motion-compensated prediction in which both forward and backward predictions are combined, thereby permitting the coding efficiency to be higher.

As a representative system of motion-compensated predictive coding as described above, MPEG (Moving Picture Expert Group) 2 is known. The MPEG 2 is a general name of the moving picture coding system which has progressed in WG (Working group) 11 of SC (Sub Committee) 29 of JTC (Joint Technical Committee) 1 of ISO (International Standardization Organization) and IEC (International Electrotechnical Commission).

In MPEG 2, Hybrid system in which motion-compensated predictive coding and Discrete Cosine Transform (hereinafter referred to as DCT) are combined is adopted.

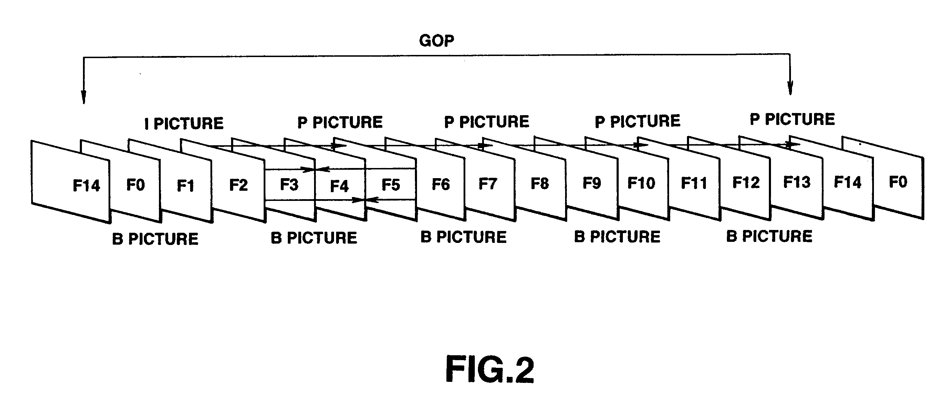

Here, in MPEG 2, what sequence (procedure) is employed in allowing picture to undergo intra-frame coding or inter-frame coding will now be described. FIG 2 is a view showing configuration of so called GOP (Group of Pictures) employed in the MPEG 2. In FIG. 2, the example where GOP consists of 15 frames is shown.

Since frame F2 is caused to undergo intra-frame coding, such frame is called I picture (intra coded picture). Moreover, since frames F5, F8, F11, F14 are caused to undergo inter-frame coding by prediction only from the forward direction, such frames are called forward motion-compensated prediction picture. Further, since frames F0, F1, F3, F4, F6, F7, F9, F10, F12, F13 are caused to undergo inter-frame coding by prediction from the forward direction, from the backward detection or from the both directions, such frames are called B picture (motion compensated interpolation Picture). It should be noted that, as described in chapter 6.3.11 of ISO/IEC JTC1/SC29/WG11 NO702rev or International Laid Open Official Gazette (WO 93/13626) according to International Application of the applicant of this application, there are pictures encoded by the frame structure and pictures encoded by the field structure.

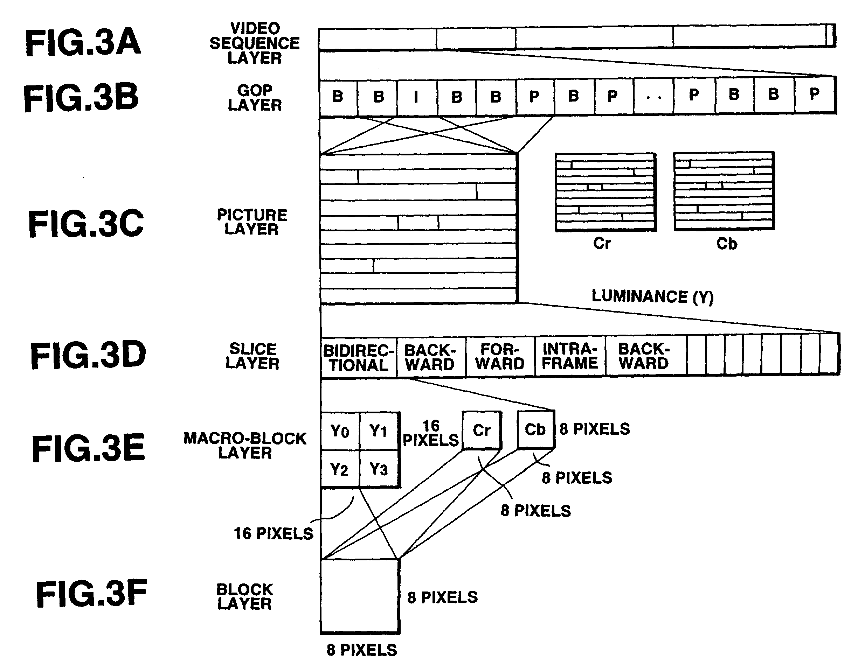

One picture is divided, as shown in FIG. 3, into N slices, and each slice includes M macro blocks. Each macro block includes luminance data Y0, Y1, Y2, Y3 included in four luminance blocks comprised of 8x8 pixels and adjacent in upper and lower directions and in left and right directions, and color difference data Cb, Cr of color difference blocks comprised of 8x8 pixels in a range corresponding to these four luminance blocks. Namely, macro block includes luminance data Y1 ~ Y4 of 16x16 pixels continuous in horizontal and vertical scanning directions with respect to luminance signal, and is, on the other hand, in two color difference signals corresponding thereto such that data quantity is caused to undergo reduction processing and is then subjected to time axis multiplexing processing, and data with respect to 16x16 pixels of luminance signal are allocated to respective one color difference blocks.

Arrangement of picture data within slice is such that picture data are caused to be continuous in macro block units. Within the macro block, picture data are caused to be successive in block units in order of raster scanning. In the MPEG 2, encoding or decoding processing is carried out in the above-described macro block units.

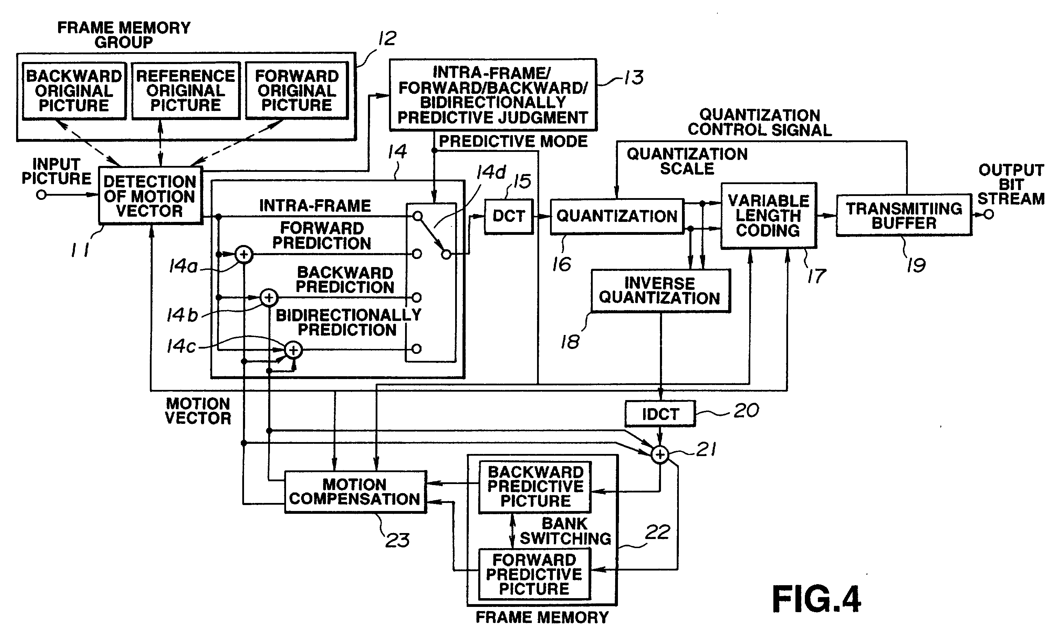

In actual terms, moving picture encoding apparatus in conformity with MPEG 2 includes, as shown in FIG. 4, frame memory group 12. This frame memory group 12 is supplied with picture data from pre-processing circuit (not shown) through motion vector detecting circuit 11. Namely, the pre-processing circuit separates input video signal into luminance signal and color difference signal, and then respectively converts those signals into luminance data comprised of 8 bits and color difference data comprised of 8 bits. In addition, in the case of, e.g., so called 4:2:0, the pre-processing circuit reduces the number of pixels of color difference data to, e.g., 1/4 to deliver these luminance data and color difference data to frame memory group 12 through motion vector detecting circuit 11.

The frame memory group 12 stores picture data of respective frames as picture data of reference original picture, forward original picture or backward original picture in accordance with a sequence set in advance. In a more practical sense, at the time of encoding picture data of frame F3 (B picture) shown in FIG. 2, for example, the frame memory group 12 stores picture data of this frame F3 as picture data of reference original picture, stores picture data of frame F2 (I picture) as picture data of forward original picture, and stores picture data of frame F5 (P picture) as picture data of backward original picture.

Motion vector detecting circuit 11 reads out picture data of respective frames stored in frame memory group 12 in accordance with the above-described data arrangement, i.e., block format to detect motion vector of reference original picture in macro block units. Namely, the motion vector detecting circuit 11 detects motion vector of current reference picture in macro block units by using forward original picture and/or backward original picture stored in the frame memory group 12. In this example, detection of motion vector is carried out by allowing a value such that sums of absolute values of differences between pictures (frames) in macro block units becomes minimum to be motion vector detected at that time. The detected motion vector is delivered to motion compensating circuit 23, etc., and sum of absolute values of differences between pictures (frames) in macro block units is delivered to intra-frame/forward/backward/bidirectionally predictive judging circuit 13.

This intra-frame/forward/backward/bidirectionally predictive judging circuit 13 determines predictive mode of macro block of reference original picture on the basis of the above-mentioned value to control, on the basis of the determined predictive mode, predictive coding circuit 14 so as to carry out switching with respect to intra-frame/forward/backward/bidirectionally prediction in macro block units.

The predictive coding circuit 14 is operative so that when intra-coding mode is set, it selects input picture data itself, and when forward/backward/bidirectionally predictive mode is set, it selects differences (hereinafter referred to as difference data) every pixels of input picture data with respect to respective predictive pictures to deliver the selected data to DCT circuit 15. Namely, this predictive coding circuit 14 includes adding circuits 14a, 14b, 14c and selector (changeover) switch 14d. These adding circuits 14a, 14b, 14c are supplied with picture data of forward predictive picture and backward predictive picture from motion compensating circuit 23 which will be described later. Adding circuit 14a generates difference data with respect to forward predictive picture, adding circuit 14b generates difference data with respect to backward predictive picture, adding circuit 14c generates difference data with respect to averaged picture of forward predictive picture and backward predictive picture, and selector switch 14d selects by switching any one of input picture data and difference data with respect to respective predictive pictures on the basis of predictive mode to deliver selected one to DCT circuit 15.

The DCT circuit 15 carries out, in block units, DCT processing of input picture data or difference data by making use of the two-dimensional correlation of video signal to deliver coefficient data (so called DCT coefficient) thus obtained to quantizing circuit 16.

The quantizing circuit 16 quantizes the coefficient data by using quantization scale (quantization step size) determined every macro block or slice to deliver quantized data thus obtained to Variable Length Coding (hereinafter referred to as VLC) circuit 17 and inverse quantizing circuit 18. Meanwhile, quantization scale used in the quantization is determined so as to take a value such that transmitting buffer memory 19 which will be described later does not break down by providing feedback of remaining capacity (residual) of the transmitting buffer memory 19. This quantization scale is delivered also to VLC circuit 17 and inverse quantizing circuit 18.

The VLC circuit 17 implements variable length coding to quantized data along with quantization scale, predictive mode and motion vector to deliver coded data thus obtained to transmitting buffer memory 19.

The transmitting buffer memory 19 once (temporarily) stores coded data thereafter to read out it at a fixed bit rate to thereby smooth the coded data to output it as bit stream, and to feed quantization control signal of macro block units back to quantizing circuit 16 in dependency upon remaining data quantity remaining in the memory, thus to control quantization scale. Thus, the transmitting buffer memory 19 adjusts data quantity generated as bit stream, thus to maintain data of reasonable remaining quantity (data quantity such that overflow or underflow does not takes place) in the memory. For example, when data remaining quantity is increased to allowed upper limit, transmitting buffer memory 19 allows quantization scale of quantizing circuit 16 to be greater by quantization control signal to thereby lower data quantity of quantized data. On the other hand, when data remaining quantity is decreased to allowed lower limit, transmitting buffer memory 19 allows quantization scale of quantizing circuit 16 to be smaller by quantization control signal to thereby increase data quantity of quantized data.

In this way, bit stream outputted from transmitting buffer memory 19 is delivered at a fixed bit rate to a moving picture decoding apparatus through transmission media comprised of transmission path, or recording media such as optical disc, magnetic disc or magnetic tape, etc.

On the other hand, inverse quantizing circuit 18 inverse-quantizes quantized data delivered from quantizing circuit 16 to reproduce coefficient data (to which quantization distortion is added) corresponding to output of the above-described DCT circuit 15 to deliver this coefficient data to Inverse Discrete Cosine Transform (hereinafter referred to as IDCT) circuit 20.

The IDCT circuit 20 carries out IDCT processing of coefficient data to reproduce picture data corresponding input picture data when intra-frame coding mode is set, and reproduces difference data corresponding to output of predictive coding circuit 14 when forward/backward/bidirectionally predictive mode is set, thus to deliver data thus reproduced to adding circuit 21.

This adding circuit 21 is supplied with picture data of motion-compensated forward predictive picture or backward predictive picture (hereinafter referred to as predictive picture data) from motion compensating circuit 23 when forward/backward/bidirectionallypredictive mode is set, and adds the motion-compensated predictive picture data and difference data to thereby reproduce picture data corresponding to input picture data in macro block units.

The picture data reproduced in this way is stored into frame memory 22. Namely, inverse quantizing circuit 18 ~ motion compensating circuit 23 constitute a local decoding circuit to locally decode quantized data outputted from quantizing circuit 16 on the basis of predictive mode to store decoded picture thus obtained into frame memory 22 as forward predictive picture or backward predictive picture. In actual terms, frame memory 22 is comprised of semiconductor memory having memory capacity corresponding to two frames (hereinafter memory corresponding to one frame will be referred to as frame buffer), and carries out bank switching of frame buffers to store picture data delivered from adding circuit 21 as forward predictive picture data or backward predictive picture data. With respect to the stored picture data, picture data of single frame is outputted as forward predictive picture data, or is outputted as backward predictive data in dependency upon picture to be coded. These predictive picture data are entirely the same pictures as those reproduced at moving picture decoding apparatus which will be described later. With respect to picture to be caused to undergo encoding processing next, forward/backward/bidirectionally predictive coding is carried out on the basis of the predictive picture.

In actual terms, motion compensating circuit 23 implements motion compensation to picture data from frame memory 22 on the basis of predictive mode and motion vector to read out the motion-compensated picture data to deliver the predictive picture data thus read out to predictive coding circuit 14 and adding circuit 21 as described above.

Moving picture decoding apparatus will now be described.

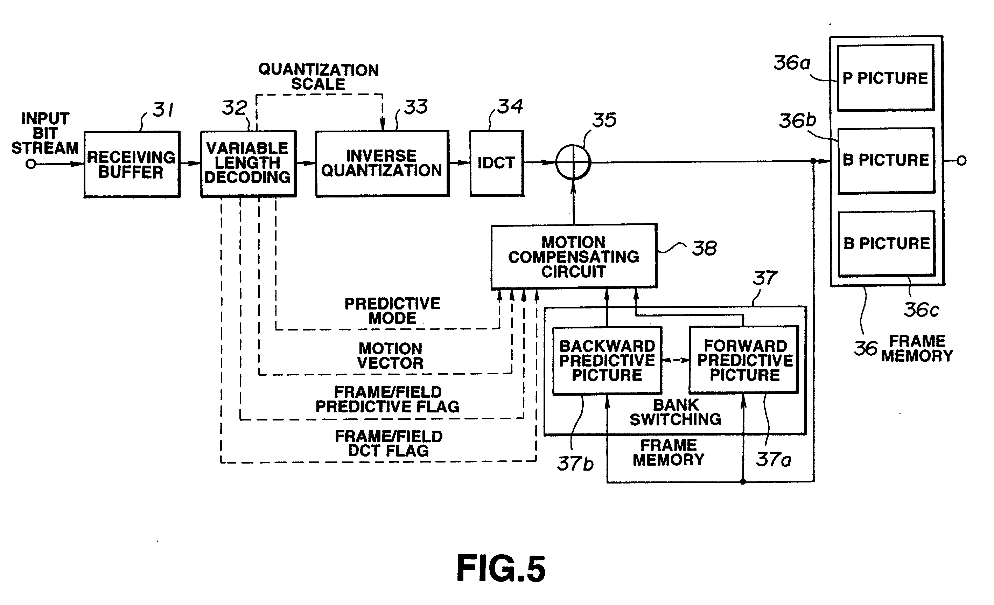

The moving picture decoding apparatus includes, as shown in FIG. 5, receiving buffer memory 31. This receiving buffer memory 31 is supplied with bit stream through transmission path or transmission media to once (temporarily) store this bit stream to deliver it to variable length decoding circuit 32.

This variable length decoding circuit 32 implements variable length decoding to bit stream, i.e., coded data to reproduce quantized data, motion vector, predictive mode and quantization scale, etc. These quantized data and quantization scale are delivered to inverse quantizing circuit 33, and motion vector and predictive mode, etc. are delivered to motion compensating circuit 38.

Operations of inverse quantizing circuit 33 ~ motion compensating circuit 38 are the same as those of the local decoding circuit of the above-described moving picture coding apparatus. These circuits carry out decoding by using quantized data, motion vector, predictive mode, quantization scale, and forward predictive picture data and backward predictive picture data which were already reproduced and were stored in frame buffers 37a, 37b of frame memory 37. As a result, reproduced picture data is outputted from adding circuit 35 in the form of block format. Picture data of the block format is delivered to frame memory 36 and is once (temporarily) stored thereinto. Thereafter, such picture data are read out therefrom in order of display and are outputted therefrom.

In actual terms, frame memory 36 has memory capacity corresponding to three frames, i.e., three frame buffers 36a, 36b, 36c, and stores picture data of, e.g., P picture, which was already reproduced and is to be outputted later, into frame buffer 36a, and once (temporarily) stores picture data of B picture while carrying out bank switching between two frame buffers 36b, 36c thereafter to read out and output them in order of display, i.e., raster scanning.

As described above, in the conventional moving picture decoding apparatus, memories corresponding to five frames in total of memory (frame memory 37) corresponding to 2 frames for decoding, and memory (frame memory 36) corresponding to three frames for carrying out sequencing of reproduced pictures to output them in accordance with raster scanning are required. For this reason, there was the problem that circuit scale is large.

European Patent Application Publication No. EP-A-0 542 195 discloses a moving picture decoding apparatus according to the precharacterising part of claim 1 hereof.

According to the present invention there is provided a moving picture decoding apparatus for decoding coded data obtained by predictive coding to reproduce picture data, said apparatus comprising:
a memory having a capacity corresponding to plural frames for storing reproduced picture data of an I picture and a P picture; and
means for decoding predictive picture data using said picture data of I picture or P picture stored in the memory;
characterised in that:
said memory has a capacity corresponding to three frames for storing reproduced picture data of an I picture, a P picture and a B picture;
means is provided responsive to a picture structure, included in said coded data, that indicates whether said picture data has a field structure or a frame structure, for generating an address for storing said picture data in said memory; and
means is provided for reading and outputting said picture data from the memory, wherein said memory sequences said I, P and B pictures output therefrom in an order that is the same order in which the I, P and B pictures are displayed.

The invention will now be further described, by way of illustrative and nonlimiting example, with reference to the accompanying drawings, in which:

FIG. 1 is a view showing picture for explaining the principle of the predictive coding.

FIG. 2 is a view showing the configuration in a more practical sense of GOP.

FIG. 3 is a view showing the configuration in a more practical sense of picture.

FIG. 4 is a block diagram showing the configuration of a moving picture coding apparatus.

FIG. 5 is a block diagram showing the configuration of a conventional moving picture decoding apparatus.

FIG. 6 is a block diagram showing the configuration in a more practical sense of a moving picture decoding apparatus to which this invention is applied.

FIG. 7 is a view for explaining write operation into frame buffer constituting the above-mentioned moving picture decoding apparatus.

FIG. 8 is a view for explaining how to use the frame buffer.

FIG. 9 is a view for explaining the detail of write/read operation of the frame buffer.

FIG. 10 is a view showing address mapping in a more practical sense of the frame memory constituting the above-mentioned moving picture decoding apparatus.

FIG. 11 is a block diagram showing the configuration in a more practical sense of address generating circuit 52 constituting the above-mentioned moving picture decoding apparatus.

FIG. 12 is a view showing address mapping in a more practical sense of the frame memory.

FIG. 13 is a block diagram showing the configuration in a more practical sense of the address generating circuit 52.

FIG. 14 is a view showing address mapping in a more practical sense of the frame memory.

FIG. 15 is a block diagram showing the configuration in a more practical sense of the address generating circuit 52.

FIG. 16 is a view showing address mapping in a more practical sense of the frame memory.

FIG. 17 is a block diagram showing the configuration in a more practical sense of the address generating circuit 52.

FIG. 18 is a view showing address mapping in a more practical sense of the frame memory.

FIG. 19 is a block diagram showing the configuration in a more practical sense of the address generating circuit 52.

FIG. 20 is a view showing address mapping in a more practical sense of the frame memory.

FIG. 21 is a block diagram showing the configuration in a more practical sense of the address generating circuit 52.

FIG. 22 is a view showing address mapping in a more practical sense of the frame memory.

FIG. 23 is a block diagram showing the configuration in a more practical sense of the address generating circuit 52.

FIG. 24 is a view showing address mapping in a more practical sense of the frame memory.

FIG. 25 is a block diagram showing the configuration in a more practical sense of the address generating circuit 52.

A preferred embodiment of a moving picture decoding apparatus according to this invention will now be described with reference to the attached drawings.

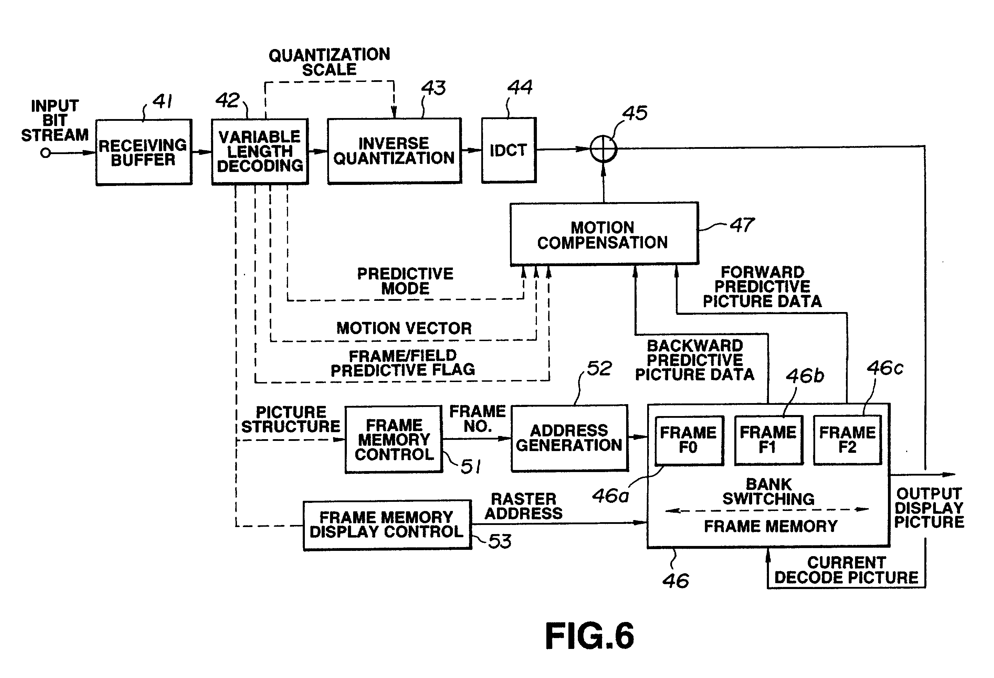

A moving picture decoding apparatus to which this invention is applied comprises, as shown in FIG. 6, for example, receiving buffer memory 41 for once (temporarily) storing coded data inputted as bit stream, variable length decoding circuit 42 for implementing variable length decoding to coded data from the receiving buffer memory 41 to reproduce quantized data and motion vector, etc., inverse quantizing circuit 43 for inversely quantizing quantized data from the variable length decoding circuit 42 to reproduce coefficient data, IDCT circuit 44 for implementing IDCT processing to coefficient data from the inverse quantizing circuit 43 to provide picture data or difference data, adding circuit 45 for adding difference data from the IDCT circuit 44 and predictive picture data to reproduce picture data, frame memory 46 for storing picture data from the adding circuit 45 and outputting stored picture data in order of display, and motion compensating circuit 47 for reading out picture data from the frame memory 46 on the basis of motion vector, etc. from the variable length decoding circuit 42 to deliver it as predictive picture data to the adding circuit 45.

Moreover, this moving picture decoding apparatus comprises frame memory control circuit 51 for generating frame No., etc. on the basis of picture structure from the variable length decoding circuit 42, address generating circuit 52 for generating write address of frame memory 46 on the basis of frame No., etc. from the frame memory control circuit 51, and frame memory display control circuit 53 for generating address for reading out picture data from the frame memory 46 in order of display.

Further, in decoding coded data inputted as bit stream to output reproduction picture data thus obtained, this moving picture decoding apparatus is adapted to store picture data of I picture and P picture already reproduced into frame memory 46 as predictive picture data for decoding, and reads out and outputs picture data from the frame memory 46 in order of display.

In actual terms, receiving buffer memory 41 serving as so called code buffer once (temporarily) stores bit stream inputted through transmission path, i.e., coded data inputted at a fixed transmission rate (speed), or coded data reproduced from transmission media comprised of picture recording medium such as optical disc, magnetic disc or magnetic tape, etc. to deliver the stored coded data to variable length decoding circuit 42.

The variable length decoding circuit 42 implements variable length decoding to coded data delivered from receiving buffer 41 to reproduce quantized data, motion vector, quantization scale, predictive mode and predictive flag, and reproduces picture structure indicating whether the above-described picture is of the frame structure or the field structure. Then, this variable length decoding circuit 42 delivers quantized data and quantization scale to inverse quantizing circuit 43, delivers motion vector, predictive mode and predictive flag to motion compensating circuit 47, and delivers picture structure to frame memory control circuit 51 and frame memory display control circuit 53.

The inverse quantizing circuit 43 inverse-quantizes quantized data delivered from variable length decoding circuit 42 in accordance with quantization scale to deliver coefficient data (so called DCT coefficient) thus obtained to IDCT circuit 44. The IDCT circuit 44 implements IDCT processing to coefficient data. In the case of decoding (hereinafter referred to as decode) of I picture, the IDCT circuit 44 reproduces original picture data in macro block units. In the case of decode of P picture or B picture, the IDCT circuit 44 reproduces difference data (so called predictive error) in macro block units. Then, these data are delivered to adding circuit 45.

The adding circuit 45 delivers picture data of I picture delivered from IDCT circuit 44 to frame memory 46 as it is. Moreover, this adding circuit 45 adds difference data of P picture or B picture delivered from IDCT circuit 44 and predictive picture data delivered from motion compensating circuit 47 to reproduce picture data of P picture or B picture in macro block units to deliver the reproduced picture data, i.e., picture data of block format to frame memory 46. Meanwhile, when, even if picture data is, e.g., data of P picture, when macro block thereof is in intra-frame predictive mode, adding circuit 45 carries out no processing similarly to picture data of I picture.

Frame memory 46 is comprised of a semiconductor memory having memory capacity corresponding to, e.g., 3 frames (hereinafter memory corresponding to one frame is called frame buffer), and carries out bank switching of frame buffers 46a, 46b, 46c on the basis of write address delivered from address generating circuit 52 to store picture data of I picture or P picture delivered from adding circuit 21 into, e.g., frame buffers 46a, 46b as forward predictive picture data or backward predictive picture data, and store picture data of B picture into frame buffer 46c as predictive picture data similar to the above.

Namely, frame memory control circuit 51 generates, on the basis of picture structure delivered from variable length decoding circuit 42, e.g., frame No. of 2 bits for designating any one of frame buffers 46a ~ 46c, field No. of 1 bit for designating whether corresponding field is the first field or the second field constituting one frame, and chroma signal of 1 bit for carrying out discrimination between luminance data and color difference data constituting picture data to deliver them to address generating circuit 52.

This address generating circuit 52 generates write address of frame memory 46 on the basis of these frame No., field No. and chroma signal. By this write address, writing into frame buffers 46a ~ 46c of reproduced picture data is carried out as described above.

Picture data stored into frame buffers 46a ~ 46c in this way are used as predictive picture data in decoding the next picture, and are read out and outputted by raster address in accordance with order of display delivered from frame memory display control circuit 53, i.e., e.g., raster scan.

Namely, motion compensating circuit 47 implements motion compensation to picture data of I picture or P picture stored in frame buffer 46a, when, e.g., decode of picture is decode of P picture and forward predictive mode is set, on the basis of predictive mode, motion vector and predictive flag delivered from variable length decoding circuit 42 to read out motion-compensated picture data to deliver the picture data thus read out to adding circuit 45 as the above-described predictive picture data.

Moreover, when decode of picture is, e.g., decode of B picture, motion compensating circuit 47 implements, on the basis of predictive mode, motion vector and predictive flag, picture data of I picture (in the case of forward predictive mode) stored in frame buffer 46a, picture data of P picture (in the case of backward predictive mode) stored in frame buffer 46b, or the both picture data (in the case of bidirectionally predictive mode) to read out the motion-compensated picture data to deliver the picture data thus read out to adding circuit 45 as the above-described predictive picture data.

On the other hand, frame memory display control circuit 53 generates, on the basis of picture structure delivered from variable length decoding circuit 42, raster address of which value increases (increments) in accordance with order of display, e.g., raster scanning executed in order of the first field and the second field when turns of I picture, P picture and B picture stored in respective frame buffers 46a ~ 46c come. By this raster address, read-out of picture data from frame buffers 46a ~ 46c is carried out as described above.

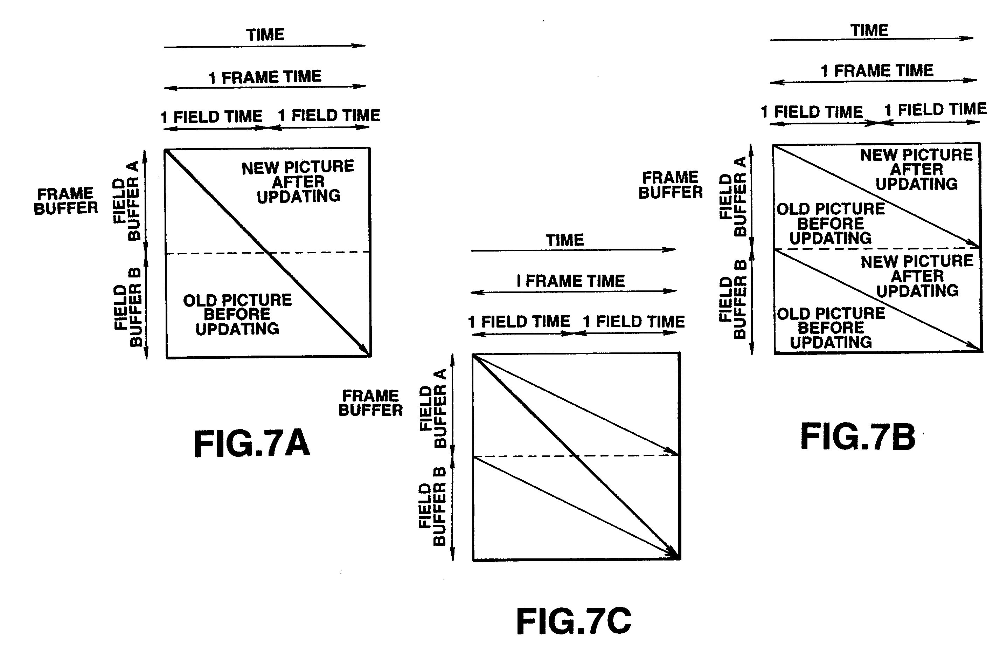

Write operation and read-out operation for output of picture data into and from frame buffers 46a ~ 46c will now be described in detail with reference to FIGS. 7 ~ 9. In these figures, the ordinate indicates address of frame buffer and the abscissa indicates time.

Frame buffers 46a ~ 46c are respectively composed of field buffers A, B as shown in FIG. 7, for example. Meanwhile, there are pictures of the frame structure and pictures of the field structures as described above. In accordance with respective picture structures, different accessing systems are employed. Moreover, as described above, read-out operation of picture data for display accesses frame buffer in raster scan direction, whereas write operation of decoded picture data accesses frame buffer in macro block units.

Namely, when picture is of the field structure, since picture data of the first field of one picture are first sequentially decoded in macro block units as shown in FIG. 7A, for example, this moving picture decoding apparatus sequentially stores these picture data into field buffer A as indicated by arrow of thick solid lines. Then, since picture data of the second field are sequentially decoded in macro block units, the moving picture decoding apparatus stores these picture data into field buffer B in order. Namely, frame buffer is updated by new picture data with passage of time in order of field buffers A, B.

On the other hand, when picture is of the frame structure, since one macro block includes picture data of both pixels constituting 8 lines of the first field and pixels constituting 8 lines of the second field, picture data of the first and second fields are simultaneously decoded in macro block units as shown in FIG. 7B, for example. Accordingly, this moving picture decoding apparatus simultaneously stores picture data of the first field into field buffer A and picture data of the second field into field buffer B as indicated by arrow of thin solid line. Namely, field buffers A, B are simultaneously updated by new picture data with passage of time. It is to be noted that FIG. 7C is a view in which FIGS. 7A and 7B are depicted in an overlapping manner. Moreover, processing time required for decoding picture data changes in dependency upon kind of predictive mode of macro block, and time from the time when picture data of one frame is decoded to the time when write operation is completed also changes. FIG. 7 shows the case where that time is the longest.

Further, in this moving picture decoding apparatus, there is adopted a scheme to write decoded picture data of I picture, P picture and B picture into frame buffers 46a ~ 46c while operating frame buffers 46a ~ 46c as described above, and to read out, in parallel to write operation, picture data for the purpose of display from frame buffers 46a ~ 46c at timing delayed by substantially one field time from writing start time.

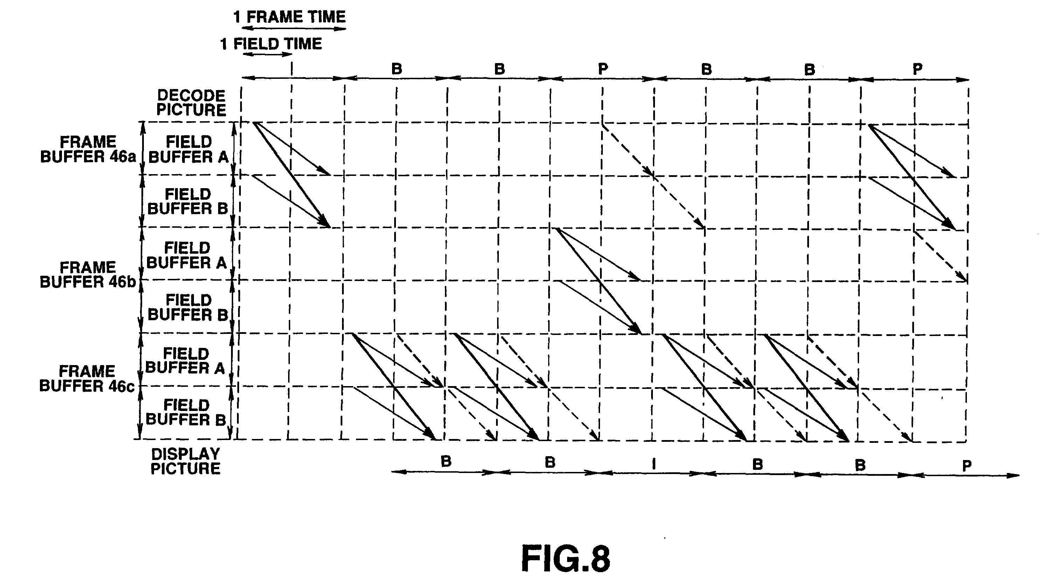

In actual terms, when sequence of pictures (frames) within GOP is assumed to be I picture, B picture, B picture, P picture, B picture, B picture, P picture ··· as shown in FIG. 8, for example, picture data of I picture is first decoded, and is written into frame buffer 46a as indicated by solid lines (thin solid lines indicate frame structure and thick solid lines indicate field structure). Then, picture data of P picture is decoded, and is written into frame buffer 46b. Thereafter, picture data of B picture is decoded and is written into frame buffer 46c. Simultaneously with this, such picture data are read out for the purpose of display at timing delayed by substantially one field as indicated by broken lines (thick broken lines indicate the first field and thin broken lines indicate the second field). Subsequently, picture data of B picture is decoded and is written into frame buffer 46c. Simultaneously with this, such picture data are read out for the purpose of display at timing delayed by substantially one field. At times subsequent thereto, read-out of picture data of P picture already decoded from frame buffer 46a, write/read-out into and from frame buffer 46c of picture data of B picture, write/read-out into and from frame buffer 46c of picture data of B picture ··· are repeated.

As described above, since this moving picture decoding apparatus reads out picture data from frame memory 46 at timing delayed by substantially one field from writing start time of picture data of picture (frame) currently decoded into frame memory 46 to output the picture data thus read out. Thus, while conventional moving picture decoding apparatus requires memory corresponding to 5 frames, this moving picture decoding apparatus can reduce capacity of frame memory to that corresponding to 3 frames. In other words, circuit scale can become compact and cost can be reduced.

Meanwhile, there is the possibility that when, as described above, frame memory 46 having capacity corresponding to three frames is commonly used for storage of predictive picture data for decoding and sequencing for display to read out this picture data in order of display from frame memory 46 at timing delayed by substantially one field from writing start time of picture data of picture currently decoded into frame memory 46, writing of picture data may overrun read-out for display in the case where picture is of the frame structure.

Namely, successive B pictures are continuously written into the same frame buffer, e.g., frame buffer 46c, and are continuously read out therefrom. As a result, there is the possibility that in the case where B picture is of the frame structure, writing of picture data may overrun read-out for display of the second field at the start time, and read-out for display of the first field at the time of completion thereof.

In a more practical sense, when successive two B pictures are assumed to be frame F (t-1), F(t), if writing of picture data of decode picture with respect to frame F(t) encoded by frame structure immediately after vertical blanking comprised of 23 horizontal scanning (time)periods (hereinafter simply referred to as 23H) between the first and second fields of frame F(t-1), although read-out of picture data of the first 8 lines of the second field of frame F(t-1) is not completed, writing of picture data of pixels constituting the first 8 lines of the second field of frame F(t) would begin in the same area, thus failing to carry out correct display.

Moreover, when writing of picture data of decode picture with respect to frame F(t) encoded by the frame structure until immediately before vertical blanking comprised of 23H between the first and second fields of frame F(t), although writing of picture data of pixels constituting the last 8 lines of the first field of frame F(t) is not completed, read-out of picture data of the last 8 lines of the first field of frame F(t) would begin, thus failing to carry out correct display.

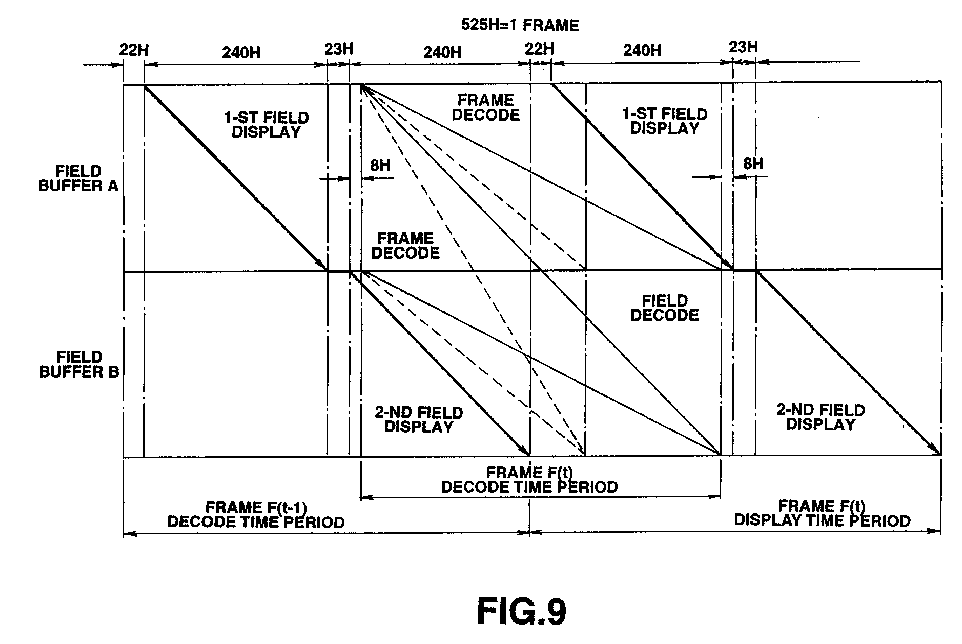

In view of the above, this moving picture decoding apparatus carries out write and read-out operations of picture data into and from frame buffer 46c of successive B pictures in accordance with the schedule shown in FIG. 9, for example. In FIG. 9, read-out of picture data for display is indicated by arrows of thick solid lines, writing of decoded picture data in the case where decode processing speed is low is indicated by thin solid lines, and writing of decoded picture data operations in the case where decode processing speed is high is indicated by broken lines.

Read-out of picture data (hereinafter simply referred to as read-out) of the first field of frame F(t-1) from field buffer A of frame buffer 46c is carried out between 22H ~ 262H while increasing (incrementing) raster address for display. After vertical blanking of 23H is completed, read-out of the second field from frame buffer B is carried out between 285H ~ 525H while similarly incrementing raster address.

At this time, at timing (293H) delayed by 8H from start of read-out of the second field of frame F(t-1), writing of frame F(t) into field buffer B is started. Namely, in the case of frame structure, write operations of picture data of the first and second fields are simultaneously started. Accordingly, in order to allow write operation of picture data not to overrun read-out in the case of frame structure, write operation is delayed by 8H as described above. It should be noted that, in the case of the field structure, since after picture data of the first field are all written, picture data of the second field are written, there is margin with respect to read-out of the first field.

After write operation is started in a manner as described above, in the case where decode processing is the highest, writing of picture data is carried out as indicated by broken lines, and in the case where decode processing speed is the lowest, writing of picture data is carried out as indicated by solid lines.

In the process of data write operation, in the case where decode processing is the highest as indicated by broken lines, writing of picture data has a margin with respect to read-out in both frame structure and field structure, i.e., write address and raster address do not become close to each other. However, in the case where decode processing speed is the lowest in the frame structure, write operations of picture data are developed as indicated by solid lines. In the last write operation of the first field, write address becomes close to raster address. In view of this, a measure is taken such that write operation is caused to be completed at time earlier by 8H from completion of read-out of the first field.

Then, read-out of frame F(t) is started at timing delayed by substantially one field from writing start time of the frame F(t). Namely, read-out of the first field of frame F(t) is carried out between 22H ~ 262H while incrementing raster address. After vertical blanking of 23H, read-out of the second field is carried out between 285H ~ 525H while incrementing raster address similarly to the case of the first field.

By continuously repeating the above-mentioned operation, read-out for display at delay of substantially one field time from writing start time of picture data can be made. Namely, frame memory 46 can be constituted by capacity corresponding to 2 frames as capacity for storage of predictive picture data and capacity corresponding to one frame as capacity for display processing of B picture. Namely, frame buffer necessary as this moving picture decoding apparatus is only required to have capacity corresponding to three frames in total of one frame for storing picture data used in the forward prediction, one frame for storing picture data used in the backward prediction, and one frame for storing decode picture of the bidirectional prediction.

As described above, in this moving picture decoding apparatus, there is adopted an approach such that after read-out of picture data of the first 8 lines of the second field of frame F(t-1) is completed, write operation of picture data of pixels constituting the first 8 lines of the second field of frame F(t) is started. Moreover, there is adopted an approach such that before read-out of picture data of the last 8 lines of the first field of frame F(t) is started, write operation of picture data of pixels constituting the last 8 lines of the first field of frame F(t) is completed.

In other words, in this moving picture decoding apparatus, writing start time of picture data of current frame into frame buffer is allowed to be time after 8 horizontal scanning periods of vertical blanking end time between the first and second field of the former frame, and writing end time of picture data of current frame into frame buffer is allowed to be time before 8H of vertical blanking start time between the first and second fields of current frame (picture).

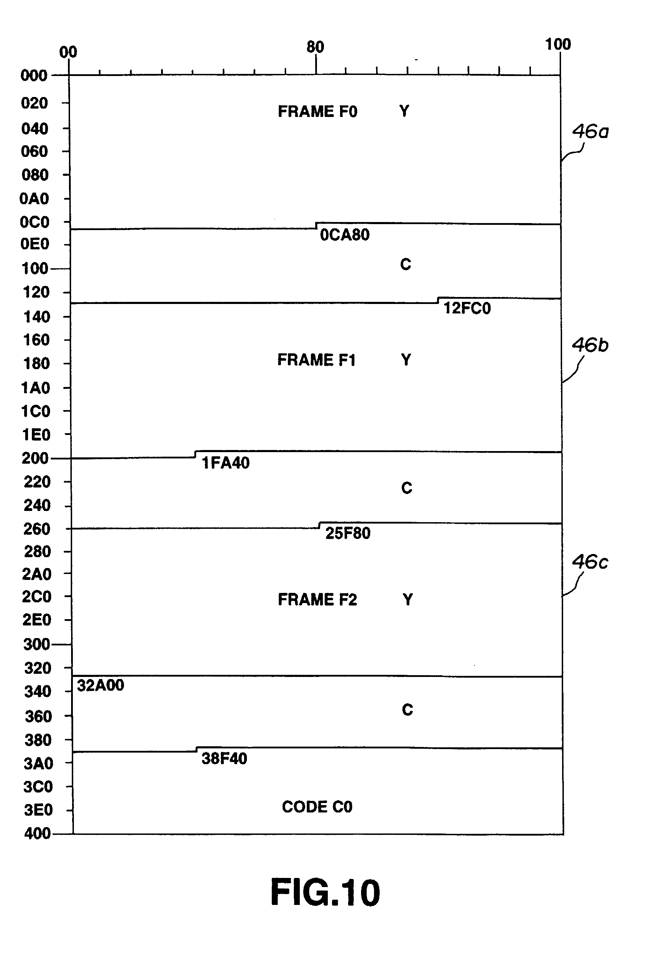

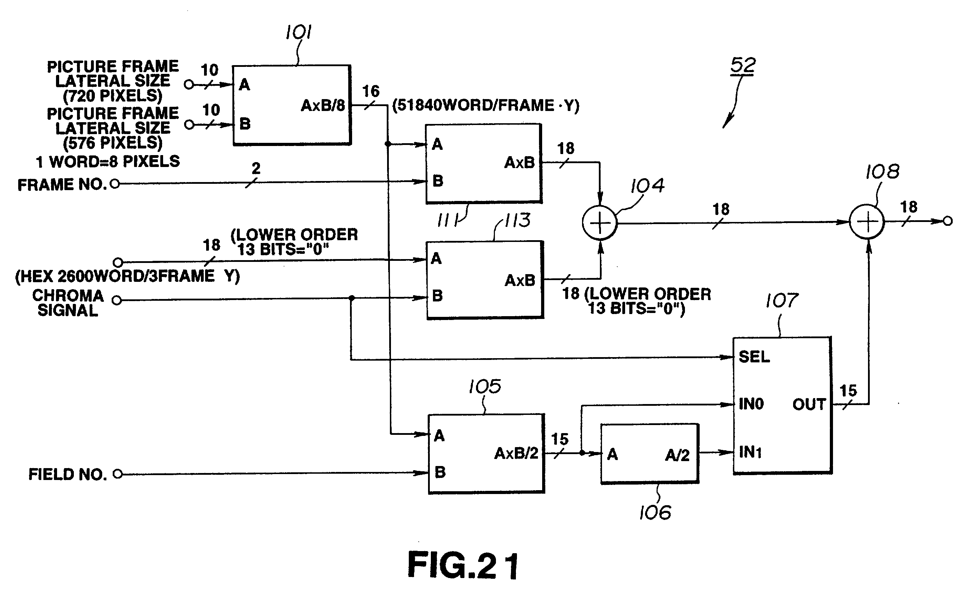

Actual address allocation (address mapping) schemes of frame memory 46 when picture data is caused to be picture data of so called 4:2:0 and actual circuit configurations of address generating circuits 52 corresponding to those address mapping schemes will now be described with reference to FIGS. 10 ~ 25. In these figures, the same reference numerals are respectively attached to the same circuits and their explanation will be omitted.

Meanwhile, in the case where picture data is caused to be picture data of 4:2:0, since 720x576 pixels are included in picture of one frame in the PAL system, respective capacities of frame buffers 46a ~ 46c become equal to 622080 (= 720x576x1.5) bytes. As result, the number of bytes necessary for frame memory 46 becomes equal to 1866240 bytes as sum total value of the capacities of these frame memories. Accordingly, frame memory 46 can be constituted with semiconductor memory of 2 M (2097152) bytes. Thus, frame memory 46 is constituted with semiconductor memory of 2 M bytes, and addresses of frame buffers 46a ~ 46c at this time are allocated (mapped) as described below. It should be noted that since the number of pixels of the NTSC system is lesser than that of the PAL system, it is needless to say that frame memory 46 can be constituted with semiconductor memory of 2 M bytes.

In the first address mapping, addresses of frame memory 46 are allocated in order of luminance data Y and color difference data C of the first frame (hereinafter referred to as frame F0), luminance data Y and color difference data C of the second frame (hereinafter referred to as frame F1), and luminance data Y and color difference data C of the third frame (hereinafter referred to as frame F2).

In actual terms, as shown in FIG. 10, for example, it is assumed that leading address of luminance data of frame F0 is represented by 00000 in the hexadecimal representation (hereinafter indicated as 00000h), leading address of color difference data C of frame F0 represented indicated by 0CA80h, leading address of luminance data Y of frame F1 is represented by 12FCOh, leading address of color difference data C of frame F1 is represented by 1FA40h, leading address of luminance data Y of frame F2 is represented by 25F80h, and leading address of color difference data of frame F2 is indicated by 32A00h. Thus, frame buffer 46a for storing picture data of frame F0, frame buffer 46b for storing picture data of frame F1, and frame buffer 46c for storing picture data of frame F2 are constituted.

The remaining addresses use areas having address of 38F40h and addresses succeeding thereto as receiving buffer memory 41, i.e., so called code buffer. As a result, as compared to the conventional moving picture decoding apparatus, memory capacity can be further reduced.

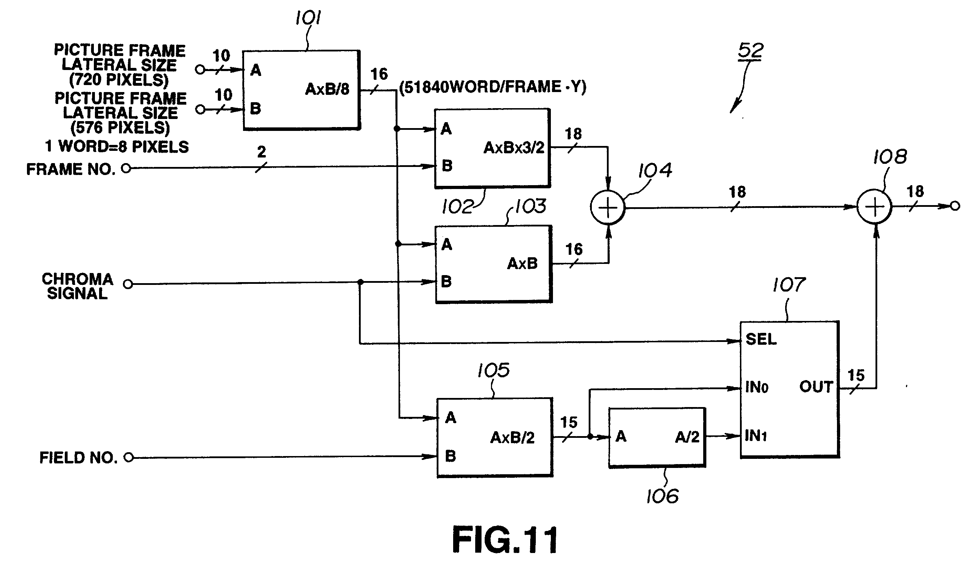

Address generating circuit 52 corresponding to the first address mapping comprises, as shown in FIG. 11, for example, multiplier 101 for calculating the number of words of luminance data Y per each frame, multiplier 102 for calculating respective leading addresses of frames F0 ~ F2 on the basis of frame No. from the frame memory control circuit 51 and output of multiplier 101, multiplier 103 for calculating relative leading addresses of color difference data C in the frame on the basis of chroma signal from the frame memory control circuit 51 and output of multiplier 101, adder 104 for calculating leading addresses, etc. of respective color difference data C of frames F0 ~ F2 on the basis of respective outputs of the multipliers 102, 103, multiplier 105 for calculating respective relative leading addresses of the first field and the second field (hereinafter respectively referred to as fields f0, f1) in luminance data Y on the basis of field No. from the frame memory control circuit 51 and output of multiplier 101, multiplier 106 for calculating respective leading addresses of fields f0, f1 in color difference data C on the basis of output of the multiplier 105, selector 107 for carrying out selective switching of respective outputs of the multipliers 105, 106, and adder 108 for adding respective outputs of the adder 104 and the selector 107.

Assuming now that one word is, e.g., 8 pixels, since one frame in the PAL system is composed of 720x576 pixels, multiplier 101 multiplies the number of pixels by 1/8 to thereby calculate the number of words per each frame of luminance data Y as 51840 (= 720x576/8), i.e., 0CA80h (16 bits) to deliver the calculated value to multipliers 102, 103, 105.

Multiplier 102 performs multiplicative operation of frame No. comprised of 2 bits delivered from frame memory control circuit 51, i.e., any one of "00", "01", "10" of binary number respectively corresponding to frames F0 ~ F2 and OCA80h delivered from multiplier 101 to multiply the multiplied value thus obtained by 3/2 to thereby calculate respective leading addresses of frames F0 ~ F2 as 00000h, 12FC0h, 25F80h (18 bits) to deliver the calculated values thus obtained to adder 104.

Multiplier 103 performs multiplicative operation of chroma signal comprised of 1 bit delivered from frame memory control circuit 51, i.e., any one of "0" and "1" respectively corresponding to luminance data Y and color difference data C and OCA80h delivered from multiplier 101 to thereby calculate respective relative leading addresses of luminance data Y and color difference data C in the frame as 00000h, OCA80h (16 bits) to deliver calculated values to adder 104.

This adder 104 adds respective outputs of multipliers 102, 103 to thereby calculate respective leading addresses of luminance data Y, color difference data C of frames F0 ~ F2 as 00000h, 12FC0h, 25F80h, OCA80h, 1FA40h, 32A00h (18 bits) to deliver calculated values to adder 108.

Multiplier 105 performs multiplicative operation of field No. comprised of 1 bit delivered from frame memory control circuit 51, i.e., any one of "0" and "1" respectively corresponding to fields f0, f1 and OCA80h delivered from multiplier 101 to multiply the multiplied value thus obtained by 1/2 to thereby calculate respective relative leading addresses of fields f0, f1 in luminance data Y as 00000h, 06540h (15 bits) to deliver calculated values to multiplier 106 and selector 107.

The multiplier 106 multiplies 06540h delivered from multiplier 105 by 1/2 to thereby calculate relative leading addresses of fields f0, f1 in color difference data C respectively as 00000h and 032AOh (15 bits) to deliver calculated values to selector 107.

The selector 107 carries out a selective operation on the basis of chroma signal delivered from frame memory control circuit 51 such that when chroma signal is "0", the selector 107 selects output of multiplier 105, while when chroma signal is "1", it selects output of multiplier 106 to deliver the selected output to adder 108.

The adder 108 adds respective outputs of adder 104 and selector 107 to thereby calculate, as shown in the FIG. 10 mentioned above, respective leading addresses of luminance data Y and color difference data C of frame F0, luminance data Y and color difference data C of frame F1, and luminance data Y and color difference data C of frame F2 respectively as 00000h, OCA80h, 12FC0h, 1FA40h, 25F80h, 32A00h (18 bits), and to calculate leading addresses of respective fields fl of luminance data Y and color difference data C, thus to deliver these addresses to frame memory 46.

The second address mapping allocates addresses of frame memory 46 in order of luminance data Y and color difference data C of frame F0, luminance data Y and color difference data C of frame F1, and luminance data Y and color difference data C of frame F2, and provides space (empty) areas between frames.

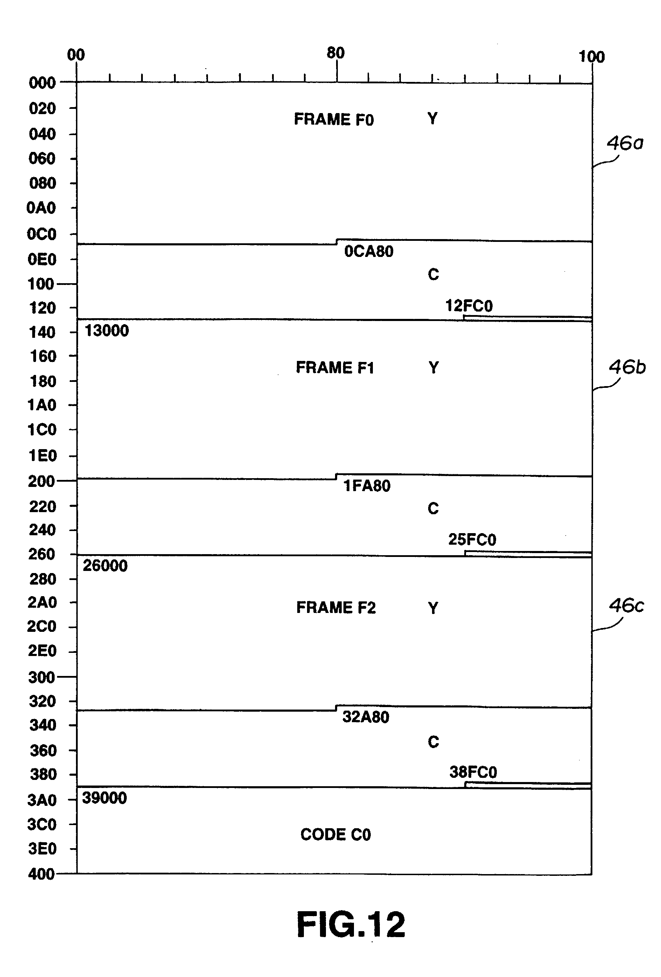

In actual terms, as shown in FIG. 12, for example, leading addresses of luminance data Y and color difference data C of frame F0, luminance data Y and color difference data C of frame F1, and luminance data Y and color difference data C of frame F2 are caused to be respectively 00000h, OCA80h, 13000h, 1FA80h, 26000h, 32A80h to thereby constitute frame buffers 46a ~ 46c.

Namely, between frames F0 and F1, and between frames F1 and F2, space areas of which addresses are respectively indicated by 12FC0h ~ 12FFFh, and 25FC0h ~ 25FFFh are provided. Areas having address of 39000h and addresses succeeding thereto are used as code buffer.

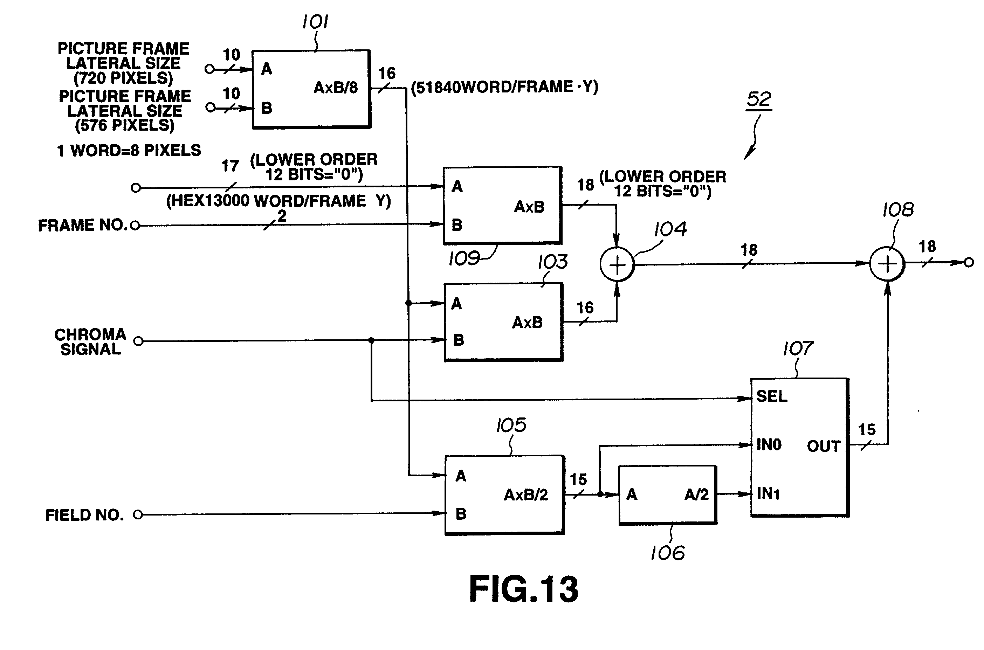

Address generating circuit 52 corresponding to the second address mapping includes, as shown in FIG. 13, for example, in place of the above-described multiplier 102 shown in FIG. 11, multiplier 109 for performing multiplicative operation of frame No. from the frame memory control circuit 51 and fixed value 13000h of 17 bits where lower order 12 bits are comprised of "0".

The multiplier 109 generates respective leading addresses of frames F0 ~ F2 as 00000h, 13000h, 26000h (18 bits where lower order 12 bits are comprised of "0") in order to provide space areas between frames as shown in the FIG. 12 mentioned above to deliver these addresses to adder 104. As a result, adder 108 generates respective addresses shown in the FIG. 12 mentioned above to deliver these addresses to frame memory 46.

Namely, since it is sufficient for multiplier 109 to perform operation of higher order 5 bits of which values are not "0", circuit scale of multiplier 109 can be reduced to more degree as compared to the above-described multiplier 102 shown in FIG. 11. In other words, employment of such address generating circuit 52 permits circuit scale to be reduced to more degree in addition to the effects/advantages of the above-described first address mapping.

The third address mapping allocates addresses of frame memory 46 in order of luminance data Y and color difference data C of field f0 of frame F0, luminance data Y and color difference data C of field f0 of frame F1, luminance data Y and color difference data C of field f0 of frame F2, luminance data Y and color difference data C of field f1 of frame F0, luminance data Y and color difference data C of field f1 of frame F1, and luminance data Y and color difference data C of field f1 of frame F2.

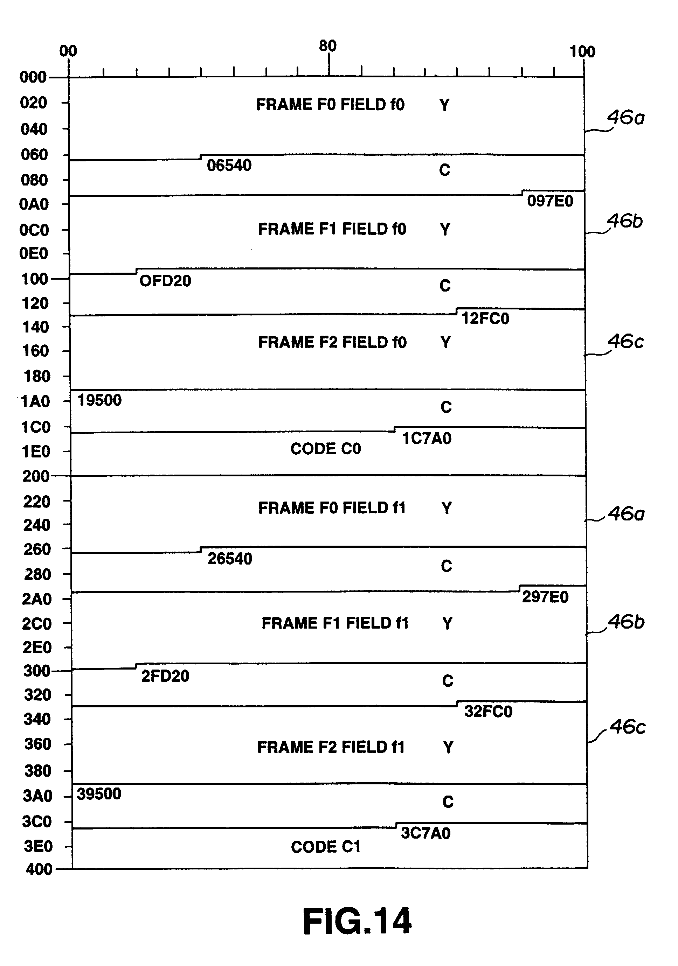

In actual terms, as shown in FIG. 14, for example, respective leading addresses of luminance data Y and color difference data C of field f0 of frame F0, luminance data Y and color difference data C of field f0 of frame F1, luminance data Y and color difference data C of field f0 of frame F2, luminance data Y and color difference data C of field f1 of frame F0, luminance data Y and color difference data C of field f1 of frame F1, and luminance data Y and color difference data C of field f1 of frame F2 are caused to be respectively 00000h, 06540h, 097E0h, OFD20h, 12FC0h, 19500h, 20000h, 26540h, 297E0h, 2FD20h, 32FC0h, and 39500h, thereby constituting frame buffers 46a ~ 46c. In addition, areas having addresses of 1C7A0h ~ 1FFFFh and 3C7A0h and addresses succeeding thereto are used as code buffer.

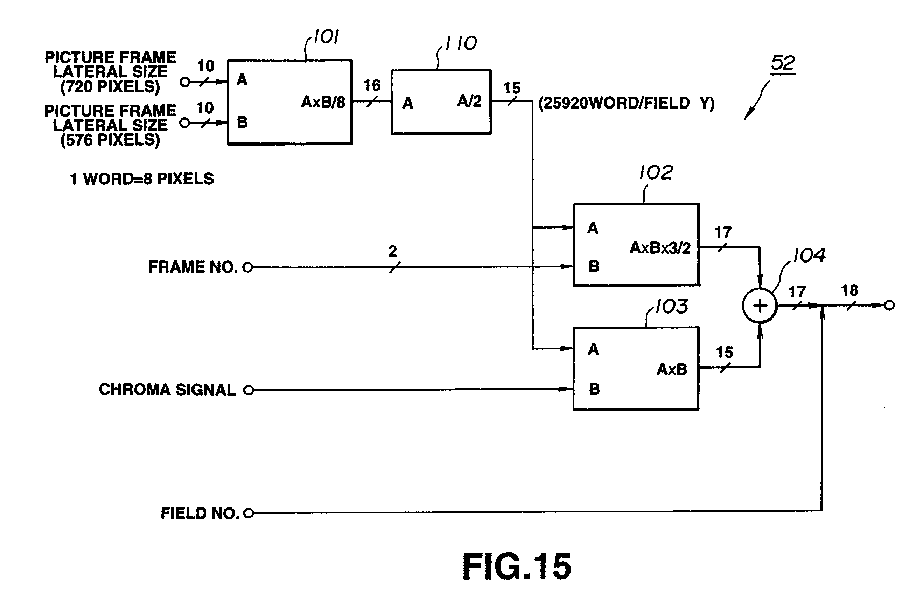

Address generating circuit 52 corresponding to the third address mapping is of a structure as shown in FIG. 15, for example, such that the above-described multipliers 105 ~ adder 108 shown in FIG. 11 are omitted, that multiplier 110 for multiplying output of the multiplier 101 by 1/2 to deliver multiplied value to the multipliers 102, 103 is provided, and that field No. from the frame memory control circuit 51 is added to output of the adder 104 as the Most Significant Bit (MSB).

Multiplier 110 multiplies output of multiplier 101, i.e., the number of words per each frame of luminance data Y by 1/2 to calculate the number of words per each field of luminance data Y as 295920, i.e., 06540h (15 bits) to deliver calculated value to multipliers 102, 103. As a result, address generating circuit 52 generates addresses where field No. from frame memory control circuit 51 is added to output of adder 104 as Most Significant Bit (MSB), i.e., respective addresses shown in the FIG. 14 mentioned above to deliver these addresses to frame memory 46.

Namely, since this address generating circuit 52 does not perform operation using field No., it is possible to separate bits for designation of field.

The fourth address mapping allocates addresses of frame memory 46 in order of luminance data Y and color difference data C of field f0 of frame F0, luminance data Y and color difference data C of field f0 of frame F1, luminance data Y and color difference data C of field f0 of frame f2, luminance data Y and color difference data C of field f1 of frame F0, luminance data Y and color difference data C of field f1 of frame F1, and luminance data Y and color difference data C of field f1 of frame F2, and provides space areas between fields.

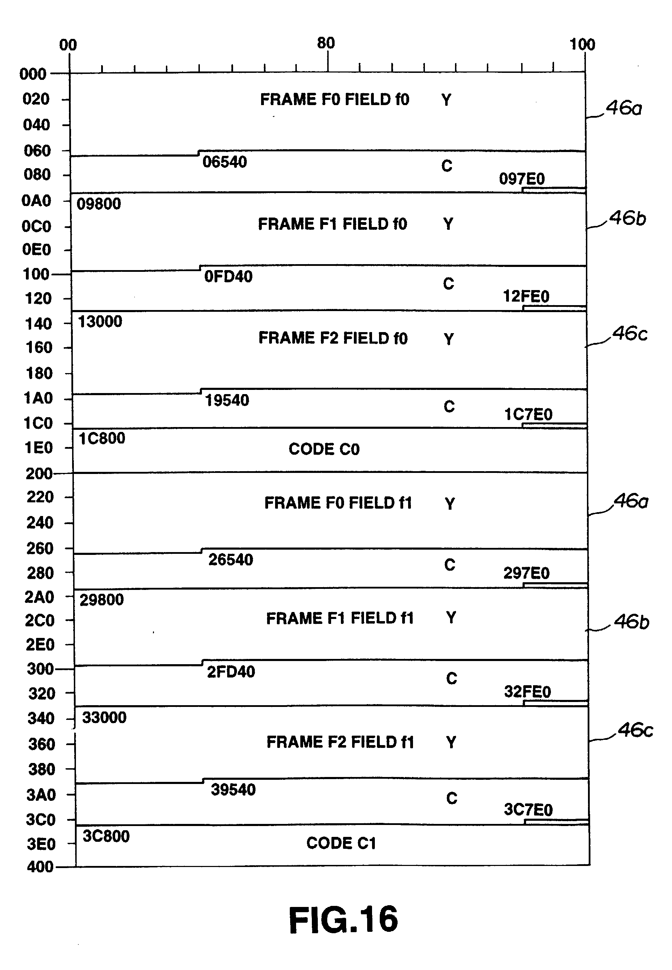

In actual terms, as shown in FIG. 16, for example, respective leading addresses of luminance data Y and color difference data C of field f0 of frame F0, luminance data Y and color difference data C of field f0 of frame F1, luminance data Y and color difference data C of field f0 of frame F2, luminance data Y and color difference data C of field f1 of frame F0, luminance data Y and color difference data C of field f1 of frame F1, and luminance data Y and color difference data C of field f1 of frame F2 are caused to be respectively 00000h, 06540h, 09800h, 0FD40h, 13000h, 19540h, 20000h, 26540h, 29800h, 2FD40h, 33000h, and 39540h, thereby constituting frame buffers 46a ~ 46c.

Namely, between fields, space areas consisting of 097E0h ~ 097FFh, 12FE0h ~ 12FFFh, 297E0h ~ 297FFh, 32FE0h ~ 32FFFh are provided. Areas having addresses of 1C800h ∼ 1FFFFh and 3C800h and addresses succeeding thereto are used as code buffer.

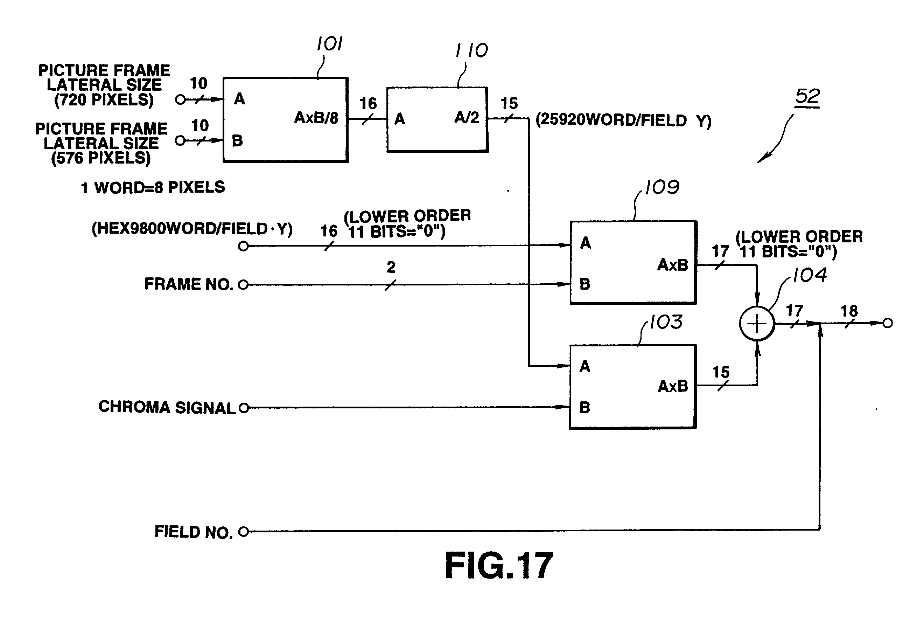

Address generating circuit 52 corresponding to the fourth address mapping includes, as shown in FIG. 17, in place of the above-described multiplier 102 shown in FIG. 15, multiplier 109 for performing multiplicative operation of frame No. from the frame memory control circuit 51 and fixed value 09800h of 16 bits where lower order 11 bits are comprised of "0".

Multiplier 109 generates leading addresses of respective fields f0 of frames F0 ~ F2 as 00000h, 09800h, 13000h (17 bits where lower order 11 bits are comprised of "0") in order to provide space areas between fields as shown in the FIG. 16 mentioned above to deliver these addresses to adder 104. As a result, this address generating circuit 52 generates addresses where field No. from frame memory control circuit 51 is added to output of adder 104 as Most Significant Bit (MSB), i.e., respective addresses shown in the FIG. 16 mentioned above to deliver these addresses to frame memory 46.

Thus, at this address generating circuit 52, it is possible to separate bits for designation of field. In addition, since it is sufficient to perform operation of higher order 5 bits of which values are not "0" at multiplier 109, circuit scale of multiplier 109 can be reduced to more degree as compared to multiplier 102.

The fifth address mapping allocates addresses of frame memory 46 in order of luminance data Y of frame F0, luminance data Y of frame F1, luminance data Y of frame F2, color difference data C of frame F0, color difference data C of frame F1 and color difference data C of frame F2.

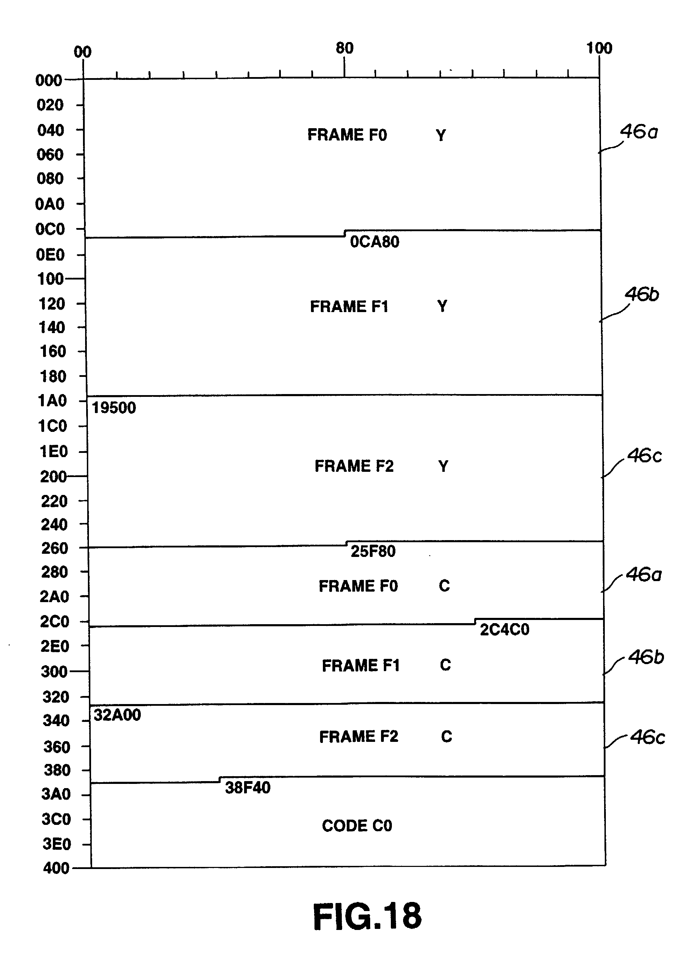

In actual terms, as shown in FIG. 18, for example, respective leading addresses of luminance data Y of frame F0, luminance data Y of frame F1, luminance data Y of frame F2, color difference data C of frame f0, color difference data C of frame F1, and color difference data C of frame F2 are caused to be respectively 00000h, 0CA80h, 19500h, 25F80h, 2C4C0h and 32A00h, thereby constituting frame buffers 46a ~ 46c. In addition, areas having address of 38F40h and addresses succeeding thereto are used as code buffer.

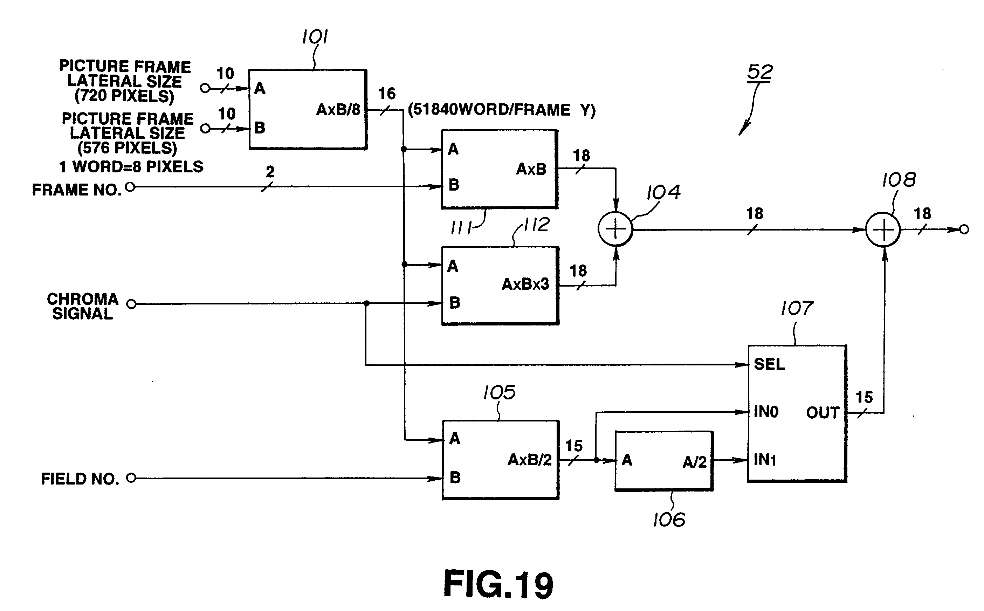

Address generating circuit 52 corresponding to the fifth address mapping includes, as shown in FIG. 19, for example, in place of the above-described multipliers 102, 103 shown in FIG. 11, multiplier 111 for performing multiplicative operation of frame No. from the frame memory control circuit 51 and output of the multiplier 101, and multiplier 112 for performing multiplicative operation of chroma signal from the frame memory control circuit 51 and output of the multiplier 101 to multiply it by 3.

Multiplier 111 performs multiplicative operation of frame No. delivered from frame memory control circuit 51 and output of multiplier 101 to thereby generate respective leading addresses of frames F0 ~ F2 comprised of only luminance data Y as 00000h, OCA80h, 19500h to deliver these addresses to adder 104. On the other hand, multiplier 112 multiplies output of multiplier 101 by 3 to thereby generate leading address of color difference data C of frame F0 as 25F80h as shown in the FIG. 18 mentioned above to deliver this address to adder 104. As a result, adder 108 generates respective addresses shown in the FIG. 18 mentioned above to deliver these addresses to frame memory 46.

The sixth address mapping allocates addresses of frame memory 46 in order of luminance data Y of frame F0, luminance data Y of frame F1, luminance data Y of frame F2, color difference data C of frame F0, color difference data C of frame F1, and color difference data C of frame F2, and provides space areas between luminance data Y and color difference data C.

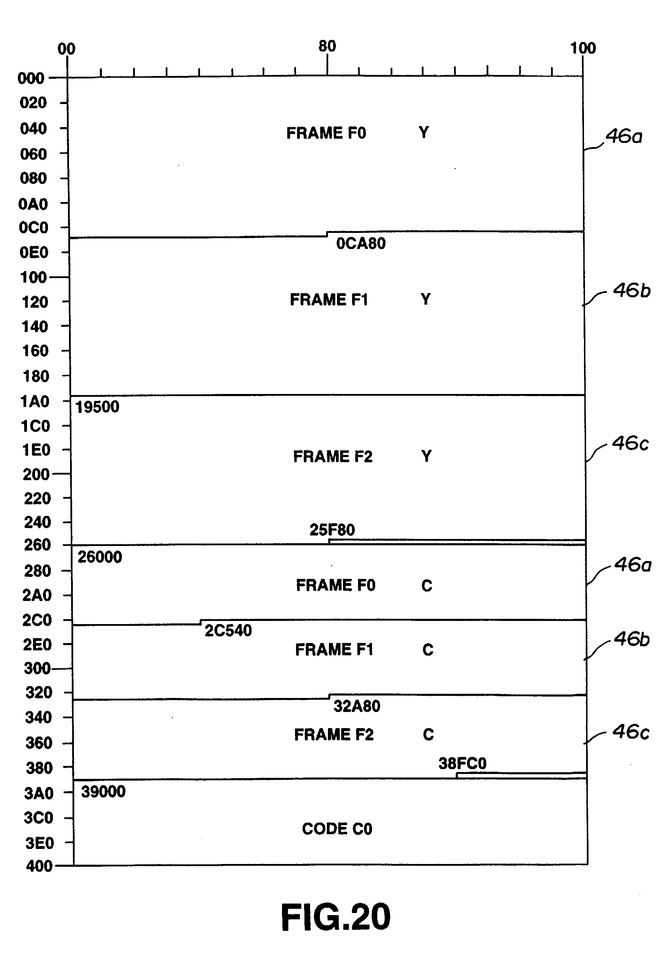

In actual terms, as shown in FIG. 20, for example, respective leading addresses of luminance data Y of frame F0, luminance data Y of frame F1, luminance data Y of frame F2, color difference data C of frame F0, color difference data C of frame F1, and color difference data C of frame F2 are caused to be respectively 00000h, 0CA80h, 19500h, 26000h, 2C540h, 32A80h, thereby constituting frame buffers 46a ~ 46c.

Namely, space areas consisting of 25F80h ~ 25FFFh are provided between luminance data Y and color difference data C. In addition, areas having address of 39000h and addresses succeeding thereto are used as code buffer.

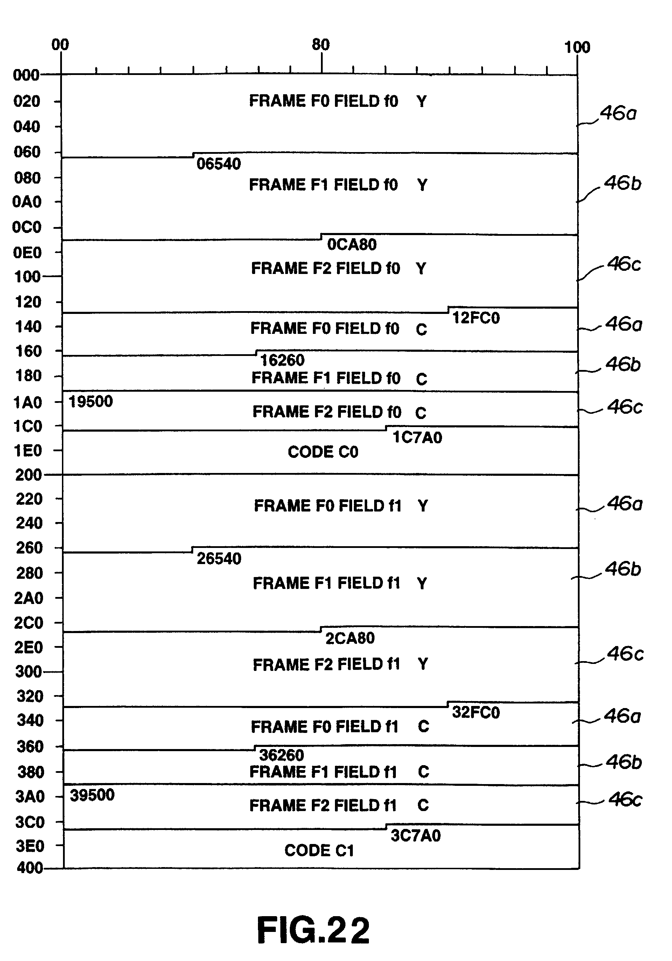

In actual terms, as shown in FIG. 22, for example, respective leading addresses of luminance data Y of field f0 of frame F0, luminance data Y of field f0 of frame F1, luminance data Y of field f0 of frame F2, luminance data Y of field f1 of frame F0, luminance data Y of field fl of frame F1, luminance data Y of field f1 of frame F2, color difference data C of field f0 of frame F0, color difference data C of field f0 of frame F1, color difference data C of field f0 of frame F2, color difference data C of field f1 of frame F0, color difference data C of field f1 of frame F1, and color difference data C of field f1 of frame F2 are caused to be respectively 00000h, 06540h, 0CA80h, 12FC0h, 18260h, 19500h, 20000h, 26540h, 2CA80h, 32FC0h, 36260h, and 39500h, thereby constituting frame buffers 46a ~ 46c. In addition, areas having addresses of 1C7A0h ~ 1FFFFh and 3C7A0h and addresses succeeding thereto are used as code buffer.

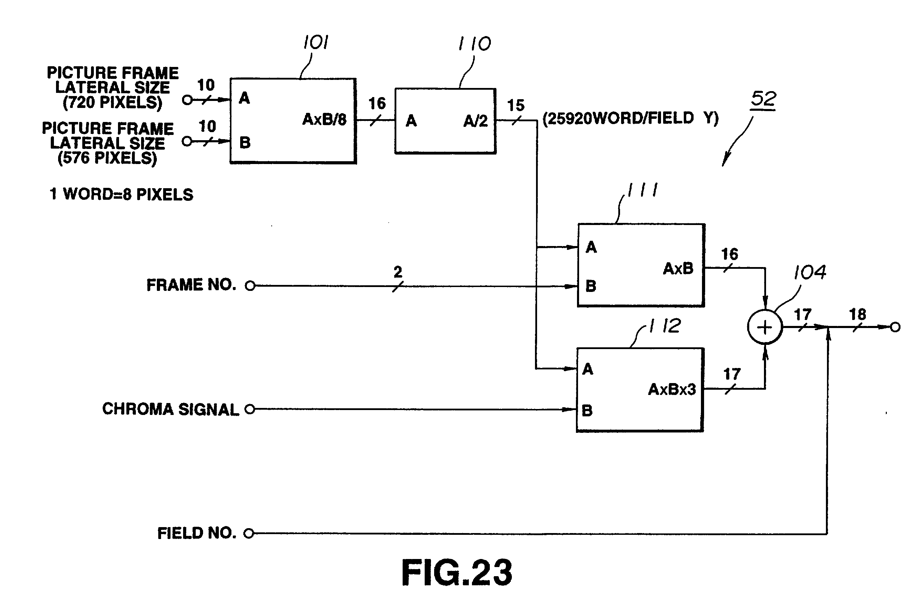

Address generating circuit 52 corresponding to the seventh address mapping is of a structure as shown in FIG. 23, for example, such that the above-described multiplier 105 ~ adder 108 shown in FIG. 19 are omitted, and multiplier 110 for multiplying output of the multiplier 101 by 1/2 to deliver multiplied value to the multipliers 111, 112, and that field NO. from the frame memory control circuit 51 is added to output of the adder 104 as Most Significant Bit (MSB).

Multiplier 110 multiplies output of multiplier 101, i.e., the number of words per each frame of luminance data Y by 1/2 to thereby calculate the number of words per each field of luminance data Y as 06540h (15 bits) to deliver the calculated value to multipliers 111, 112. As a result, this address generating circuit 52 generates addresses where field No. from frame memory control circuit 51 is added to output of adder 104 as Most Significant Bit (MSB), i.e., respective addresses shown in the FIG. 22 mentioned above to deliver these addresses to frame memory 46.

Thus, this address generating circuit 52 can separate bits for designation of field.

The eighth address mapping allocates addresses of frame memory 46 in order of luminance data Y of field f0 of frame F0, luminance data Y of field f0 of frame F1, luminance data Y of field f0 of frame F2, luminance data Y of field f1 of frame F0, luminance data Y of field fl of frame F1, luminance data Y of field f1 of frame F2, color difference data C of field f0 of frame F0, color difference data C of field f0 of frame F1, color difference data C of field f0 of frame F2, color difference data C of field f1 of frame F0, color difference data C of field f1 of frame F1, and color difference data C of field f1 of frame F2, and provides space areas between luminance data Y and color difference data C.

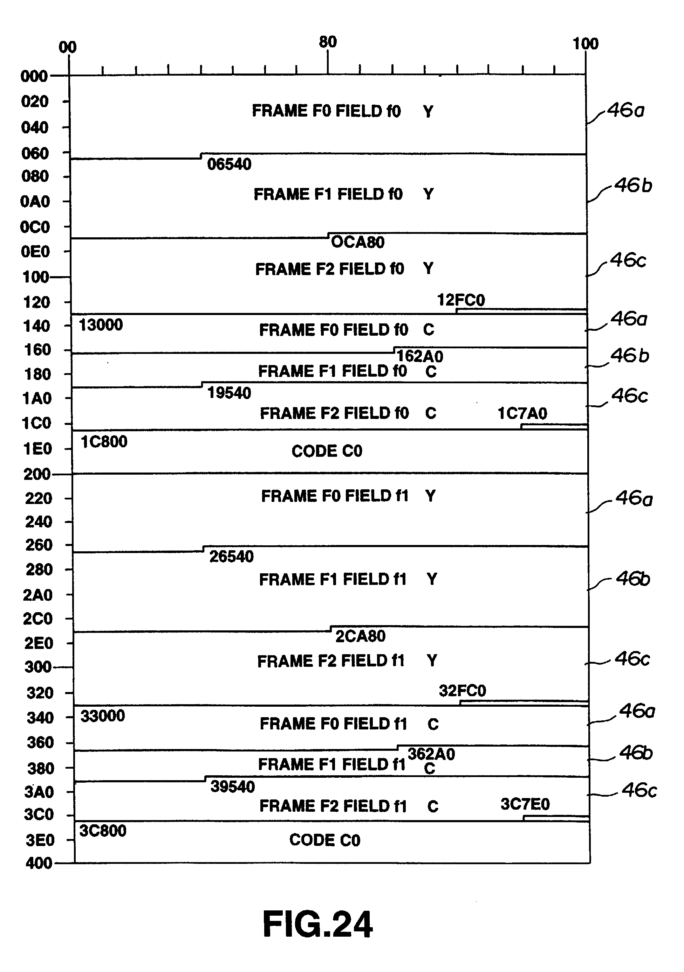

In actual terms, as shown in FIG. 24, for example, respective leading addresses of luminance data Y of field f0 of frame F0, luminance data Y of field f0 of frame F1, luminance data Y of field f0 of frame F2, luminance data Y of field f1 of frame F0, luminance data Y of field fl of frame F1, luminance data Y of field f1 of frame F2, color difference data C of field f0 of frame F0, color difference data C of field f0 of frame F1, color difference data C of field f0 of frame F2, color difference data C of field f1 of frame F0, color difference data C of field f1 of frame F1, and color difference data C of field f1 of frame F2 are caused to be respectively 00000h, 06540h, 0CA80h, 13000h, 162A0h, 19540h, 20000h, 26540h, 2CA80h, 33000h, 362A0h, and 39540h, thereby constituting frame buffers 46a ~ 46c.

Namely, space areas consisting of 12FC0h ~ 12FFFh, 32FC0h ~ 32FFFh are provided between luminance data Y and color difference data C. In addition, areas having addresses of 1C800h ~ 1FFFFh and 3C800h and addresses succeeding thereto are used as code buffer.

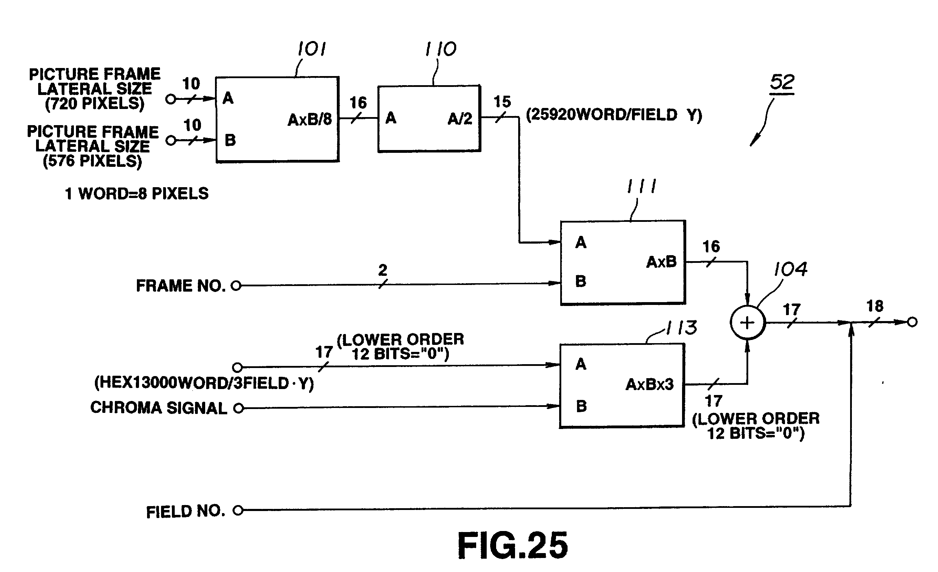

Address generating circuit 52 corresponding to the eighth address mapping includes, as shown in FIG. 25, for example, multiplier 113 for performing multiplicative operation of chroma signal from the frame memory control circuit 51 and fixed value 13000h of 17 bits where lower order 12 bits are comprised of "0" in place of the above-described multiplier 112 shown in FIG. 23.

Multiplier 113 generates leading address of color difference data C of field f0 of frame F0 as 13000h (17 bits where lower order 12 bits are comprised of "O") in order to provide space areas between luminance data Y and color difference data C as shown in the FIG. 24 mentioned above to deliver these addresses to adder 104. As a result, this address generating circuit 52 generates addresses where field No. from frame memory control circuit 51 is added to output of adder 104, i.e., respective addresses shown in the FIG. 24 mentioned above to deliver these addresses to frame memory 46.

Thus, this address generating circuit 52 can separate bits for designation of field. In addition, since it is sufficient to perform operation of higher order 5 bits of which values are not "0" at multiplier 113, circuit scale of multiplier 113 can be reduced to more degree as compared to the above-described multiplier 112 shown in FIG. 23.

Moving picture decoding apparatus to which this invention is applied includes memory having capacity corresponding to 3 frames for storing reproduced picture data of I picture, P picture and B picture. Picture data of I picture or P picture stored in this memory is used as picture data of predictive picture for decoding, and picture data are read out from the memory in order of display and are outputted therefrom. Thus, capacity can be reduced and cost can be also reduced as compared to the conventional moving picture decoding apparatus.

Further, in this moving picture decoding apparatus, such an approach is employed to read out and output picture data of current frame from the memory at timing delayed by substantially one field from writing start time of picture data of current frame into the memory, to allow writing start time of picture data of current frame into the memory to be time after 8 horizontal scanning periods of vertical blanking end time between the first and second fields of the former frame, and to allow writing end time of picture data of current frame into the memory to be time before 8 horizontal scanning periods of vertical blanking start time between the first and second fields of current frame. Accordingly, there is no possibility that write operation of picture data into the memory may overrun read-out operation of picture data from the memory. Thus, it is possible to correctly reproduce moving picture.

In addition, this moving picture decoding apparatus carries out the above-described operation, thereby making it possible to use semiconductor memory having capacity of 2M bytes.

## Claims

1. A moving picture decoding apparatus for decoding coded data obtained by predictive coding to reproduce picture data, said apparatus comprising:
a memory (46) having a capacity corresponding to plural frames for storing reproduced picture data of an I picture and a P picture; and
means (42-45) for decoding predictive picture data using said picture data of I picture or P picture stored in the memory;
characterised in that:
said memory (46) has a capacity corresponding to three frames for storing reproduced picture data of an I picture, a P picture and a B picture;
means (51, 52) is provided responsive to a picture structure, included in said coded data, that indicates whether said picture data has a field structure or a frame structure, for generating an address for storing said picture data in said memory (46); and
means (53) is provided for reading and outputting said picture data from the memory, wherein said memory sequences said I, P and B pictures output therefrom in an order that is the same order in which the I, P and B pictures are displayed.

2. Apparatus according to claim 1, wherein the picture data comprises 4:2:0 picture data, and the memory (46) comprises a semiconductor memory having a capacity of 2M bytes.

3. Apparatus according to claim 1, wherein the memory is used as a code buffer for storing received coded data.

4. Apparatus according to claim 1, wherein said picture data comprises luminance data and color difference data.

5. Apparatus according to claim 4, wherein addresses of the memory (46) are allocated in order of luminance data and color difference data of the first frame, luminance data and color difference data of the second frame, and luminance data and color difference data of the third frame.

6. Apparatus according to claim 4, wherein, in allocating addresses of the memory (46) in order of luminance data and color difference data of the first frame, luminance data and color difference data of the second frame, and luminance data and color difference data of the third frame, space areas are provided between frames.

7. Apparatus according to claim 4, wherein addresses of the memory (46) are allocated in order of luminance data and color difference data of the first field of the first frame, luminance data and color difference data of the second field of the first frame, luminance data and color difference data of the first field of the second frame, luminance data and color difference data of the second field of the second frame, luminance data and color difference data of the first field of the third frame, and luminance data and color difference data of the second field of the third frame.

8. Apparatus according to claim 4, wherein, in allocating addresses of the memory (46) in order of luminance data and color difference data of the first field of the first frame, luminance data and color difference data of the second field of the first frame, luminance data and color difference of the first field of the second frame, luminance data and color difference data of the second field of the second frame, luminance data and color different data of the first field of the third frame, and luminance data and color difference data of the second field of the third frame, space areas are provided between fields.

9. Apparatus according to claim 4, wherein addresses of the memory (46) are allocated in order of luminance data of the first frame, luminance data of the second frame, luminance data of the third frame, color difference data of the first frame, color difference data of the second frame, and color difference data of the third frame.

10. Apparatus according to claim 4, wherein, in allocating addresses of the memory (46) in order of luminance data of the first frame, luminance data of the second frame, luminance data of the third frame, color difference data of the first frame, color difference data of the second frame, and color difference data of the third frame, space areas are provided between luminance data and color difference data.

11. Apparatus according to claim 4, wherein addresses of the memory (46) are allocated in order of luminance data of the first field of the first frame, luminance data of the first field of the second frame, luminance data of the first field of the third frame, color difference data of the first field of the first frame, color difference data of the first field of the second frame, color difference data of the first field of the third frame, luminance date of the second field of the first frame, luminance data of the second field of the second frame, luminance data of the second field of the third frame, color difference data of the second field of the first frame, color difference data of the second field of the second frame, and color difference data of the second field of the third frame.

12. Apparatus according to claim 4, wherein, in allocating addresses of the memory (46) in order of luminance data of the first field of the first frame, luminance data of the first field of the second frame, luminance data of the first field of the third frame, color difference data of the first field of the first frame, color difference data of the first field of the second frame, color difference data of the first field of the third frame, luminance data of the second field of the first frame, luminance data of the second field of the second frame, luminance data of the second field of the third frame, color difference data of the second field of the first frame, color difference data of the second field of the second frame and color difference data of the second field of the third frame, space areas are provided between luminance data and color difference data.

## Patentansprüche

1. Bewegtbilddekodier-Einrichtung zum Dekodieren kodierter Daten, die durch Prädiktionskodierung gewonnen sind, um Bilddaten wiederzugeben, welche Einrichtung umfaßt:
einen Speicher (46), der eine Kapazität hat, die einer Vielzahl von Vollbildern entspricht, zum Speichern wiedergegebener Bilddaten eines I-Bildes und eines P-Bildes und
Mittel (42-45) zum Dekodieren prädiktiver Bilddaten unter Benutzung der Bilddaten des I-Bildes oder des P-Bildes, das in dem Speicher gespeichert ist,
dadurch **gekennzeichnet,** daß
der Speicher (46) eine drei Vollbildern entsprechende Kapazität zum Speichern wiedergegebener Bilddaten eines I-Bildes, eines P-Bildes und eines B-Bildes hat,
ein Mittel (51, 52), das auf eine in den kodierten Daten enthaltene Bildstruktur anspricht, die anzeigt, ob die Bilddaten eine Halbbildstruktur oder eine Vollbildstruktur haben, zum Erzeugen einer Adresse zum Speichern der Bilddaten in dem Speicher (46) vorgesehen ist und
ein Mittel (53) zum Auslesen und Ausgeben der Bilddaten aus dem Speicher vorgesehen ist, wobei der Speicher die I-, P- und B-Bilder, welche von diesem ausgegeben werden, sequentiell in einer Reihenfolge ordnet, welche die gleiche Reihenfolge ist, in der die I-, P- und B-Bilder angezeigt werden.

2. Einrichtung nach Anspruch 1, bei der die Bilddaten aus 4:2:0-Bilddaten bestehen und der Speicher (46) aus einem Halbleiterspeicher besteht, der eine Kapazität von 2 Mbyte hat.

3. Einrichtung nach Anspruch 1, bei der der Speicher als ein Kodepufferspeicher zum Speichern empfangener kodierter Daten benutzt wird.

4. Einrichtung nach Anspruch 1, wobei die Bilddaten Leuchtdichtedaten und Farbdifferenzdaten umfassen.

5. Einrichtung nach Anspruch 4, bei der Adressen des Speichers (46) in der Reihenfolge der Leuchtdichtedaten und Farbdifferenzdaten des ersten Vollbildes, der Leuchtdichtedaten und Farbdifferenzdaten des zweiten Vollbildes und der Leuchtdichtedaten und Farbdifferenzdaten des dritten Vollbildes zugeordnet werden.

6. Einrichtung nach Anspruch 4, bei der beim Zuordnen von Adressen des Speichers (46) in der Reihenfolge der Leuchtdichtedaten und Farbdifferenzdaten des ersten Vollbildes, der Leuchtdichtedaten und Farbdifferenzdaten des zweiten Vollbildes und der Leuchtdichtedaten und Farbdifferenzdaten des dritten Vollbildes Leerstellenbereiche zwischen Vollbildern vorgesehen werden.

7. Einrichtung nach Anspruch 4, bei der Adressen des Speichers (46) in der Reihenfolge der Leuchtdichtedaten und Farbdifferenzdaten des ersten Halbbildes des ersten Vollbildes, der Leuchtdichtedaten und Farbdifferenzdaten des zweiten Halbbildes des ersten Vollbildes, der Leuchtdichtedaten und Farbdifferenzdaten des ersten Halbbildes des zweiten Vollbildes, der Leuchtdichtedaten und Farbdifferenzdaten des zweiten Halbbildes des zweiten Vollbildes, der Leuchtdichtedaten und Farbdifferenzdaten des ersten Halbbildes des dritten Vollbildes und der Leuchtdichtedaten und Farbdifferenzdaten des zweiten Halbbildes des dritten Vollbildes zugeordnet werden.

8. Einrichtung nach Anspruch 4, bei der beim Zuordnen von Adressen des Speichers (46) in der Reihenfolge der Leuchtdichtedaten und Farbdifferenzdaten des ersten Halbbildes des ersten Vollbildes, der Leuchtdichtedaten und Farbdifferenzdaten des zweiten Halbbildes des ersten Vollbildes, der Leuchtdichtedaten und Farbdifferenzdaten des ersten Halbbildes des zweiten Vollbildes, der Leuchtdichtedaten und Farbdifferenzdaten des zweiten Halbbildes des zweiten Vollbildes, der Leuchtdichtedaten und Farbdifferenzdaten des ersten Halbbildes des dritten Vollbildes und der Leuchtdichtedaten und Farbdifferenzdaten des zweiten Halbbildes des dritten Vollbildes Leerstellenbereiche zwischen Halbbildern vorgesehen werden.

9. Einrichtung nach Anspruch 4, bei der Adressen des Speichers (46) in der Reihenfolge der Leuchtdichtedaten des ersten Vollbildes, der Leuchtdichtedaten des zweiten Vollbildes, der Leuchtdichtedaten des dritten Vollbildes, der Farbdifferenzdaten des ersten Vollbildes, der Farbdifferenzdaten des zweiten Vollbildes und der Farbdifferenzdaten des dritten Vollbildes zugeordnet werden.

10. Einrichtung nach Anspruch 4, bei der beim Zuordnen von Adressen des Speichers (46) in der Reihenfolge der Leuchtdichtedaten des ersten Vollbildes, der Leuchtdichtedaten des zweiten Vollbildes, der Leuchtdichtedaten des dritten Vollbildes, der Farbdifferenzdaten des ersten Vollbildes, der Farbdifferenzdaten des zweiten Vollbildes und der Farbdifferenzdaten des dritten Vollbildes Leerstellenbereiche zwischen Leuchtdichtedaten und Farbdifferenzdaten vorgesehen werden.

11. Einrichtung nach Anspruch 4, bei der Adressen des Speichers (46) in der Reihenfolge der Leuchtdichtedaten des ersten Halbbildes des ersten Vollbildes, der Leuchtdichtedaten des ersten Halbbildes des zweiten Vollbildes, der Leuchtdichtedaten des ersten Halbbildes des dritten Vollbildes, der Farbdifferenzdaten des ersten Halbbildes des ersten Vollbildes, der Farbdifferenzdaten des ersten Halbbildes des zweiten Vollbildes, der Farbdifferenzdaten des ersten Halbbildes des dritten Vollbildes, der Leuchtdichtedaten des zweiten Halbbildes des ersten Vollbildes, der Leuchtdichtedaten des zweiten Halbbildes des zweiten Vollbildes, der Leuchtdichtedaten des zweiten Halbbildes des dritten Vollbildes, der Farbdifferenzdaten des zweiten Halbbildes des ersten Vollbildes, der Farbdifferenzdaten des zweiten Halbbildes des zweiten Vollbildes und der Farbdifferenzdaten des zweiten Halbbildes des dritten Vollbildes zugeordnet werden.

12. Einrichtung nach Anspruch 4, bei der beim Zuordnen von Adressen des Speichers (46) in der Reihenfolge der Leuchtdichtedaten des ersten Halbbildes des ersten Vollbildes, der Leuchtdichtedaten des ersten Halbbildes des zweiten Vollbildes, der Leuchtdichtedaten des ersten Halbbildes des dritten Vollbildes, der Farbdifferenzdaten des ersten Halbbildes des ersten Vollbildes, der Farbdifferenzdaten des ersten Halbbildes des zweiten Vollbildes, der Farbdifferenzdaten des ersten Halbbildes des dritten Vollbildes, der Leuchtdichtedaten des zweiten Halbbildes des ersten Vollbildes, der Leuchtdichtedaten des zweiten Halbbildes des zweiten Vollbildes, der Leuchtdichtedaten des zweiten Halbbildes des dritten Vollbildes, der Farbdifferenzdaten des zweiten Halbbildes des ersten Vollbildes, der Farbdifferenzdaten des zweiten Halbbildes des zweiten Vollbildes und der Farbdifferenzdaten des zweiten Halbbildes des dritten Vollbildes Leerstellenbereiche zwischen Leuchtdichtedaten und Farbdifferenzdaten vorgesehen werden.

## Revendications

1. Appareil de décodage d'image mobile pour décoder des données codées obtenues au moyen d'un codage prédictif afin de reproduire des données d'image, ledit appareil comprenant :
une mémoire (46) présentant une capacité qui correspond à plusieurs images pour stocker des données d'image reproduites d'une image I et d'une image P ; et
un moyen (42-45) pour décoder des données d'image de prédiction en utilisant lesdites données d'image d'image I ou d'image P stockées dans la mémoire,
caractérisé en ce que :
ladite mémoire (46) présente une capacité qui correspond à trois images pour stocker des données d'image reproduites d'une image I, d'une image P et d'une image B ;
un moyen (51, 52) est prévu pour, en réponse à une structure d'image, incluse dans lesdites données codées, qui indique si lesdites données d'image présentent une structure de trame ou une structure d'image, générer une adresse pour stocker lesdites données d'image dans ladite mémoire (46) ; et
un moyen (53) est prévu pour lire et émettre en sortie lesdites données d'image à partir de la mémoire, où ladite mémoire séquence lesdites images I, P et B émises en sortie depuis selon un ordre qui est le même ordre que celui selon lequel les images I, P et B sont affichées.

2. Appareil selon la revendication 1, dans lequel les données d'image comprennent des données d'image 4:2:0 et la mémoire (46) comprend une mémoire à semiconducteur présentant une capacité de 2 mégaoctets.

3. Appareil selon la revendication 1, dans lequel la mémoire est utilisée en tant que tampon de code pour stocker des données codées reçues.

4. Appareil selon la revendication 1, dans lequel lesdites données d'image comprennent des données de luminance et des données de différence de couleur.

5. Appareil selon la revendication 4, dans lequel des adresses de la mémoire (46) sont allouées selon l'ordre défini par les données de luminance et les données de différence de couleur de la première image, par les données de luminance et les données de différence de couleur de la seconde image et par les données de luminance et les données de différence de couleur de la troisième image.

6. Appareil selon la revendication 4, dans lequel, lors de l'allocation d'adresses de la mémoire (46) selon l'ordre défini par les données de luminance et les données de différence de couleur de la première image, par les données de luminance et les données de différence de couleur de la seconde image et par les données de luminance et les données de différence de couleur de la troisième image, des zones d'espace sont prévues entre les images.

7. Appareil selon la revendication 4, dans lequel des adresses de la mémoire (46) sont allouées selon l'ordre défini par les données de luminance et les données de différence de couleur de la première trame de la première image, par les données de luminance et les données de différence de couleur de la seconde trame de la première image, par les données de luminance et les données de différence de couleur de la première trame de la seconde image, par les données de luminance et les données de différence de couleur de la seconde trame de la seconde image, par les données de luminance et les données de différence de couleur de la première trame de la troisième image et par les données de luminance et les données de différence de couleur de la seconde trame de la troisième image.

8. Appareil selon la revendication 4, dans lequel, lors de l'allocation d'adresses de la mémoire (46) selon l'ordre défini par les données de luminance et les données de différence de couleur de la première trame de la première image, par les données de luminance et les données de différence de couleur de la seconde trame de la première image, par les données de luminance et les données de différence de couleur de la première trame de la seconde image, par les données de luminance et les données de différence de couleur de la seconde trame de la seconde image, par les données de luminance et les données de différence de couleur de la première trame de la troisième image et par les données de luminance et les données de différence de couleur de la seconde trame de la troisième image, des zones d'espace sont prévues entre les trames.

9. Appareil selon la revendication 4, dans lequel des adresses de la mémoire (46) sont allouées selon l'ordre défini par les données de luminance de la première image, par les données de luminance de la seconde image, par les données de luminance de la troisième image, par les données de différence de couleur de la première image, par les données de différence de couleur de la seconde image et par les données de différence de couleur de la troisième image.

10. Appareil selon la revendication 4, dans lequel, lors de l'allocation d'adresses de la mémoire (46) selon l'ordre défini par les données de luminance de la première image, par les données de luminance de la seconde image, par les données de luminance de la troisième image, par les données de différence de couleur de la première image, par les données de différence de couleur de la seconde image et par les données de différence de couleur de la troisième image, des zones d'espace sont prévues entre les données de luminance et les données de différence de couleur.

11. Appareil selon la revendication 4, dans lequel des adresses de la mémoire (46) sont allouées selon l'ordre défini par les données de luminance de la première trame de la première image, par les données de luminance de la première trame de la seconde image, par les données de luminance de la première trame de la troisième image, par les données de différence de couleur de la première trame de la première image, par les données de différence de couleur de la première trame de la seconde image, par les données de différence de couleur de la première trame de la troisième image, par les données de luminance de la seconde trame de la première image, par les données de luminance de la seconde trame de la seconde image, par les données de luminance de la seconde trame de la troisième image, par les données de différence de couleur de la seconde trame de la première image, par les données de différence de couleur de la seconde trame de la seconde image et par les données de différence de couleur de la seconde trame de la troisième image.

12. Appareil selon la revendication 4, dans lequel, lors de l'allocation d'adresses de la mémoire (46) selon l'ordre défini par les données de luminance de la première trame de la première image, par les données de luminance de la première trame de la seconde image, par les données de luminance de la première trame de la troisième image, par les données de différence de couleur de la première trame de la première image, par les données de différence de couleur de la première trame de la seconde image, par les données de différence de couleur de la première trame de la troisième image, par les données de luminance de la seconde trame de la première image, par les données de luminance de la seconde trame de la seconde image, par les données de luminance de la seconde trame de la troisième image, par les données de différence de couleur de la seconde trame de la première image, par les données de différence de couleur de la seconde trame de la seconde image et par les données de différence de couleur de la seconde trame de la troisième image, des zones d'espace sont prévues entre les données de luminance et les données de différence de couleur.
